(19) Europäisches Patentamt / European Patent Office / Office européen des brevets

(11) **EP 4 553 726 A1**

(12) **EUROPEAN PATENT APPLICATION**

(43) Date of publication:
14.05.2025 Bulletin 2025/20

(51) International Patent Classification (IPC):
**G06Q 10/0631** (2023.01)  **G06Q 10/0637** (2023.01)
**G06F 9/50** (2006.01)

(21) Application number: 24202558.3

(22) Date of filing: **25.09.2024**

(52) Cooperative Patent Classification (CPC):
**G06Q 10/06315; G06F 9/5027; G06F 9/5072;
G06F 9/5088; G06Q 10/06375**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **09.11.2023 IN 202321076675**

(71) Applicant: **Tata Consultancy Services Limited
Maharashtra (IN)**

(72) Inventors:
• **SAHU, PANKAJ KUMAR**
 **411057 Pune (IN)**
• **ROY, SHUBHRO SHOVAN**
 **700156 Kolkata (IN)**
• **GHAROTE, MANGESH SHARAD**
 **411057 Pune (IN)**
• **LODHA, SACHIN PREMSUKH**
 **411057 Pune (IN)**

(74) Representative: **Goddar, Heinz J.
Boehmert & Boehmert
Anwaltspartnerschaft mbB
Pettenkoferstrasse 22
80336 München (DE)**

(54) **METHOD AND SYSTEM FOR CARBON-AWARE STORAGE SERVICE SELECTION IN THE MULTI-CLOUD ENVIRONMENT**

(57) Decisions related to need to service selection in the multi-cloud environment be taken by the enterprise at the cloud adoption phase as well as post cloud adoption phase. Existing approaches addressing the cloud selection and data placement do not appear to be capable of various requirements/parameters that are to be considered for optimum selection of cloud data centers. Embodiments disclosed here in provide a method and system for carbon-aware storage service selection in the multi-cloud environment, in which the system facilitates selection of storage in the multi-cloud environment by generating a plurality of migration solutions. The migration solutions are generated by the system by selectively prioritizing a) a migration cost, b) an operational cost, and c) a carbon footprint. After migrating the non-compliant UCs by selective prioritization, a list of feasible solutions is obtained. These solutions are used as input to obtain optimal solutions with minimal migration cost, operational cost and carbon footprint lower than the new threshold.

FIG. 3

**Description**

CROSS-REFERENCE TO RELATED APPLICATIONS AND PRIORITY

The present application claims priority to Indian application no. 202321076675, filed on November 9, 2023.

TECHNICAL FIELD

The disclosure herein generally relates to cloud services, and, more particularly, to method and system for carbon-aware storage service selection in the multi-cloud environment.

BACKGROUND

Cloud computing offers various benefits such as pay-as-you-go-model, flexibility, scalability, resilience, and robust security. Hence, enterprises are switching to cloud for their various storage and computational requirements and to efficiently serve its globally distributed customers. Further, to avoid vendor lock-in and reduce dependencies, enterprises are choosing multi-cloud environment. However, the decision of cloud service provider (CSP) selection and data placement in cloud becomes complex due to multiple factors such as varied pricing, Quality of Service (QoS), data regulations, carbon footprint, and so on.

These decisions need to be taken by the enterprise at the cloud adoption phase as well as post cloud adoption phase. There could be various challenges post cloud adoption, such as changes in the carbon footprint target set by the organization, emerging data regulations at some geographical locations; and changes in the business requirements. Due to these challenges, the decisions need to be reviewed. Also, both sustainability and data regulation compliance are a shared responsibility in cloud. To make efficient decision on global data placement, enterprises need to consider multiple related factors. Existing approaches addressing the cloud selection and data placement do not appear to be capable of various requirements/parameters that are to be considered for optimum selection of cloud. Another challenge is that many of these parameters are subject to changes over a period of time. For example, data regulations in different countries may change from time to time. Existing approaches fail to cater to the changes, which in turn affects the cloud selection strategies.

SUMMARY

Embodiments of the present disclosure present technological improvements as solutions to one or more of the above-mentioned technical problems recognized by the inventors in conventional systems. For example, in one embodiment, a processor implemented method is provided. The method includes receiving, via one or more hardware processors, information on a non-compliant initial allocation of a plurality of User Centers (UC), a plurality of enterprise user requirements, and specifications of one or more service providers as input data. Further, the initial allocation is optimized, via the one or more hardware processors, wherein the optimization of the initial allocation includes: identifying one or more non-compliant UC locations from among the plurality of UCs; determining a) a migration cost, b) an operational cost, and c) a carbon footprint involved in migrating each of the one or more non-compliant UC locations to a Data Regulatory (DR) and latency compliant Data centre (DC) location; determining a priority weight for each of the migration cost, the operational cost, and the carbon footprint; and obtaining a plurality of migration solutions, for a plurality of combinations of the priority weights. Obtaining the plurality of migration solutions includes performing for each of the one or more non-compliant UC locations: listing a plurality of migrations to the compliant DC location for the one or more non-compliant UC locations; determining a score for each of the plurality of migrations based on the determined priority weights, by using Multi Criteria Decision Making (MCDM) technique for the one or more non-compliant UC locations; ranking the plurality of migrations based on the determined score for the one or more non-compliant UC locations; selecting a migration having highest rank from among the plurality of migrations; migrating each of the one or more non-compliant UC locations to the compliant DC location, using the selected migration as a feasible solution; and generating a list of the plurality of feasible solutions, wherein the plurality of feasible solutions are generated by selectively prioritizing a) a migration cost, b) an operational cost, and c) a carbon footprint for each solution, and wherein the plurality of feasible solutions are used as the plurality of migration solutions to optimize the non-compliant initial allocation of the plurality of User Centers (UC).

In an embodiment of the method, a UC from among a plurality of UCs is identified as the non-compliant UC if the UC is not DR compliant and a measured latency of UC-DC is exceeding a pre-defined threshold value.

In an embodiment of the method, the priority weight for each of the migration cost, the operational cost, and the carbon footprint is determined such that sum of the priority weights is 1.

In an embodiment of the method, the initial allocation is generated by iteratively performing till each of the one or more UCs is allocated to a compliant DC among the one or more DCs: obtaining, via the one or more hardware processors, a) one or more storage and processing requirements of one or more UCs, b) locations of a plurality of data centers (DCs), c) a resource cap, and d) pricing of the plurality of DCs; identifying, via the one or more hardware processors, one or more DR compliant DCs from among the plurality of DCs, and in same region of the one or more UCs; and allocating, via the one or more hardware processors, the one or more UCs to the identified one or more DR compliant DCs if a total carbon footprint of the one or more DR compliant DCs is less than a predefined threshold value, wherein a total operation cost is updated after the allocation, and wherein if not available in the same region as that of the one or more UCs, the allocation is done in a different region.

In an embodiment of the method, an initial allocation is determined as the non-compliant allocation, comprising detecting a plurality of non-compliances in the initial allocation over a period of time due to one or more of: (i) a change in DR criteria for the one or more UCs, (ii) a change in invocation frequencies (demands) for one or more UCs resulting in the violation of pre-defined QoS thresholds, and (iii) a change in carbon footprint threshold for the allocation where the current total carbon footprint of the allocation violates the new threshold on carbon footprint.

In an embodiment of the method, selectively prioritizing the migration cost, the operational cost, and the carbon footprint for each solution is based on i) a priority given to a first objective in a pre-defined range (0,1), wherein the priority increases in arithmetic progression for each of the solution, ii) a priority given to a second objective for each of the plurality of feasible solutions, wherein the priority to the second objective is selected in a pre-defined range of (0, 1- priority of the first objective), and iii) priority given to a third objective for each of the plurality of feasible solutions, wherein the priority given to the third objective is equal to 1-(priority of first objective + priority of second objective).

In an embodiment of the method, the plurality of feasible solutions are ordered to form an ordered solution list in each of a plurality of iterations by constructing an ideal function for each of the plurality of iterations, wherein the ideal function is constructed by taking a minimal value of (i) operational cost, (ii) migration cost, (iii) total carbon footprint considering the plurality of solutions in the solution list, and with one or more enterprise decided priority values for each of first objective, the second objective, and the third objective.

In an embodiment of the method, the plurality of feasible solutions are used with one or more other data to obtain a set of compliant solutions having (i) a minimal operational cost, (ii) a minimal migration cost, and (iii) a total carbon footprint value less than a predefined threshold, comprising iteratively performing in each of a plurality of iterations till a pre-defined number of iterations is reached: maintaining a fixed number of ordered solutions in the solution list and ordering the fixed number of ordered solutions based on an ideal function in each of a plurality of iterations; initializing a duplicate solution for each of the plurality of feasible solutions in a solution list, and replacing each UC-DC allocation in the duplicate solution by a DR criteria, latency, and carbon footprint compliant DC among a plurality of DCs, satisfying a pre-defined criterion wherein by replacing each UC-DC allocation, a new solution is obtained for each solution existing in the solution list; and including each newly generated solution in the solution list, if the newly generated solution if a determined quality of the newly generated solution is exceeding a measured quality of at least one existing solution in the solution list, and wherein while including the newly generated solution in the solution list, a solution having least value of measured quality among the solutions existing in the solution list is discarded the last solution or else discarding the newly generated solution.

In an embodiment of the method, the pre-defined number of iterations is a value in a predefined range (0,1), and is dependent on (i) a current iteration count, and (ii) the pre-defined limit on iterations, such that the value of this threshold deceases with increase in iteration count.

In an embodiment of the method, the DC is carbon footprint compliant for an UC if a resulting carbon footprint of the allocation is less than an estimated UC-carbon footprint limit, where the estimated UC-carbon footprint limit for each UC is obtained based on: (i) storage and processing resource requirements of the UC, and (ii) a predefined threshold on the total carbon footprint.

In another embodiment, a system is provided. The system includes one or more hardware processors, a communication interface, and a memory storing a plurality of instructions, wherein the plurality of instructions cause the one or more hardware processors to receive information on a non-compliant initial allocation of a plurality of User Centers (UC), a plurality of enterprise user requirements, and specifications of one or more service providers as input data. Further, the initial allocation is optimized, via the one or more hardware processors, wherein the optimization of the initial allocation includes: identifying one or more non-compliant UC locations from among the plurality of UCs; determining a) a migration cost, b) an operational cost, and c) a carbon footprint involved in migrating each of the one or more non-compliant UC locations to a Data Regulatory (DR) and latency compliant Data centre (DC) location; determining a priority weight for each of the migration cost, the operational cost, and the carbon footprint; and obtaining a plurality of migration solutions, for a plurality of combinations of the priority weights. Obtaining the plurality of migration solutions includes performing for each of the one or more non-compliant UC locations: listing a plurality of migrations to the compliant DC location for the one or more non-compliant UC locations; determining a score for each of the plurality of migrations based on the determined priority weights, by using Multi Criteria Decision Making (MCDM) technique for the one or more non-compliant UC locations; ranking the plurality of migrations based on the determined score for the one or more non-compliant UC locations; selecting a migration having highest rank from among the plurality of migrations; migrating each of the one or more non-compliant UC locations to the compliant DC location, using the selected migration as a feasible solution; and generating a list of the plurality of feasible solutions, wherein the plurality of feasible solutions are generated by selectively prioritizing a) a migration cost, b) an operational cost, and c) a carbon footprint for each solution, and wherein the plurality of feasible solutions are used as the plurality of migration solutions to optimize the non-compliant initial allocation of the plurality of User Centers (UC).

In another embodiment of the system, the one or more hardware processors are configured to identify a UC from among a plurality of UCs as the non-compliant UC if the UC is not DR compliant and a measured latency of UC-DC is exceeding a pre-defined threshold value.

In another embodiment of the system, the one or more hardware processors are configured to determine the priority weight for each of the migration cost, the operational cost, and the carbon footprint such that sum of the priority weights is 1.

In another embodiment of the system, the one or more hardware processors are configured to generate the initial allocation by iteratively performing till each of the one or more UCs is allocated to a compliant DC among the one or more DCs: obtaining, via the one or more hardware processors, a) one or more storage and processing requirements of one or more UCs, b) locations of a plurality of data centers (DCs), c) a resource cap, and d) pricing of the plurality of DCs; identifying, via the one or more hardware processors, one or more DR compliant DCs from among the plurality of DCs, and in same region of the one or more UCs; and allocating, via the one or more hardware processors, the one or more UCs to the identified one or more DR compliant DCs if a total carbon footprint of the one or more DR compliant DCs is less than a predefined threshold value, wherein a total operation cost is updated after the allocation, and wherein if not available in the same region as that of the one or more UCs, the allocation is done in a different region.

In another embodiment of the system, the one or more hardware processors are configured to determine the an initial allocation as the non-compliant allocation, by detecting a plurality of non-compliances in the initial allocation over a period of time due to one or more of: (i) a change in DR criteria for the one or more UCs, (ii) a change in invocation frequencies (demands) for one or more UCs resulting in the violation of pre-defined QoS thresholds, and (iii) a change in carbon footprint threshold for the allocation where the current total carbon footprint of the allocation violates the new threshold on carbon footprint.

In another embodiment of the system, the one or more hardware processors are configured to selectively prioritize the migration cost, the operational cost, and the carbon footprint for each solution based on i) a priority given to a first objective in a pre-defined range (0,1), wherein the priority increases in arithmetic progression for each of the solution, ii) a priority given to a second objective for each of the plurality of feasible solutions, wherein the priority to the second objective is selected in a pre-defined range of (0, 1- priority of the first objective), and iii) priority given to a third objective for each of the plurality of feasible solutions, wherein the priority given to the third objective is equal to 1-(priority of first objective + priority of second objective).

In another embodiment of the system, the one or more hardware processors are configured to order the plurality of feasible solutions to form an ordered solution list in each of a plurality of iterations by constructing an ideal function for each of the plurality of iterations, wherein the ideal function is constructed by taking a minimal value of (i) operational cost, (ii) migration cost, (iii) total carbon footprint considering the plurality of solutions in the solution list, and with one or more enterprise decided priority values for each of first objective, the second objective, and the third objective.

In another embodiment of the system, the one or more hardware processors are configured to use the plurality of feasible solutions with one or more other data to obtain a set of compliant solutions having (i) a minimal operational cost, (ii) a minimal migration cost, and (iii) a total carbon footprint value less than a predefined threshold, comprising iteratively performing in each of a plurality of iterations till a pre-defined number of iterations is reached: maintaining a fixed number of ordered solutions in the solution list and ordering the fixed number of ordered solutions based on an ideal function in each of a plurality of iterations; initializing a duplicate solution for each of the plurality of feasible solutions in a solution list, and replacing each UC-DC allocation in the duplicate solution by a DR criteria, latency, and carbon footprint compliant DC among a plurality of DCs, satisfying a pre-defined criterion wherein by replacing each UC-DC allocation, a new solution is obtained for each solution existing in the solution list; and including each newly generated solution in the solution list, if the newly generated solution if a determined quality of the newly generated solution is exceeding a measured quality of at least one existing solution in the solution list, and wherein while including the newly generated solution in the solution list, a solution having least value of measured quality among the solutions existing in the solution list is discarded the last solution or else discarding the newly generated solution.

In another embodiment of the system, the pre-defined number of iterations is a value in a predefined range (0,1), and is dependent on (i) a current iteration count, and (ii) the pre-defined limit on iterations, such that the value of this threshold deceases with increase in iteration count.

In another embodiment of the system, the DC is carbon footprint compliant for an UC if a resulting carbon footprint of the allocation is less than an estimated UC-carbon footprint limit, where the estimated UC-carbon footprint limit for each UC is obtained based on: (i) storage and processing resource requirements of the UC, and (ii) a predefined threshold on the total carbon footprint.

In yet another aspect, a non-transitory computer readable medium is provided. The non-transitory computer readable medium includes a plurality of instructions, which when executed, cause the one or more hardware processors to receive information on a non-compliant initial allocation of a plurality of User Centers (UC), a plurality of enterprise user requirements, and specifications of one or more service providers as input data. Further, the initial allocation is optimized, via the one or more hardware processors, wherein the optimization of the initial allocation includes: identifying one or more non-compliant UC locations from among the plurality of UCs; determining a) a migration cost, b) an operational cost, and c) a carbon footprint involved in migrating each of the one or more non-compliant UC locations to a Data Regulatory (DR) and latency compliant Data centre (DC) location; determining a priority weight for each of the migration cost, the operational cost, and the carbon footprint; and obtaining a plurality of migration solutions, for a plurality of combinations of the priority weights. Obtaining the plurality of migration solutions includes performing for each of the one or more non-compliant UC locations: listing a plurality of migrations to the compliant DC location for the one or more non-compliant UC locations; determining a score for each of the plurality of migrations based on the determined priority weights, by using Multi Criteria Decision Making (MCDM) technique for the one or more non-compliant UC locations; ranking the plurality of migrations based on the determined score for the one or more non-compliant UC locations; selecting a migration having highest rank from among the plurality of migrations; migrating each of the one or more non-compliant UC locations to the compliant DC location, using the selected migration as a feasible solution; and generating a list of the plurality of feasible solutions, wherein the plurality of feasible solutions are generated by selectively prioritizing a) a migration cost, b) an operational cost, and c) a carbon footprint for each solution, and wherein the plurality of feasible solutions are used as the plurality of migration solutions to optimize the non-compliant initial allocation of the plurality of User Centers (UC).

In yet another embodiment of the non-transitory computer readable medium, a UC from among a plurality of UCs is identified as the non-compliant UC if the UC is not DR compliant and a measured latency of UC-DC is exceeding a pre-defined threshold value.

In yet another embodiment of the non-transitory computer readable medium, the priority weight for each of the migration cost, the operational cost, and the carbon footprint is determined such that sum of the priority weights is 1.

In yet another embodiment of the non-transitory computer readable medium, the initial allocation is generated by iteratively performing till each of the one or more UCs is allocated to a compliant DC among the one or more DCs: obtaining, via the one or more hardware processors, a) one or more storage and processing requirements of one or more UCs, b) locations of a plurality of data centers (DCs), c) a resource cap, and d) pricing of the plurality of DCs; identifying, via the one or more hardware processors, one or more DR compliant DCs from among the plurality of DCs, and in same region of the one or more UCs; and allocating, via the one or more hardware processors, the one or more UCs to the identified one or more DR compliant DCs if a total carbon footprint of the one or more DR compliant DCs is less than a predefined threshold value, wherein a total operation cost is updated after the allocation, and wherein if not available in the same region as that of the one or more UCs, the allocation is done in a different region.

In yet another embodiment of the non-transitory computer readable medium, an initial allocation is determined as the non-compliant allocation, comprising detecting a plurality of non-compliances in the initial allocation over a period of time due to one or more of: (i) a change in DR criteria for the one or more UCs, (ii) a change in invocation frequencies (demands) for one or more UCs resulting in the violation of pre-defined QoS thresholds, and (iii) a change in carbon footprint threshold for the allocation where the current total carbon footprint of the allocation violates the new threshold on carbon footprint.

In yet another embodiment of the non-transitory computer readable medium, selectively prioritizing the migration cost, the operational cost, and the carbon footprint for each solution is based on i) a priority given to a first objective in a pre-defined range (0,1), wherein the priority increases in arithmetic progression for each of the solution, ii) a priority given to a second objective for each of the plurality of feasible solutions, wherein the priority to the second objective is selected in a pre-defined range of (0, 1- priority of the first objective), and iii) priority given to a third objective for each of the plurality of feasible solutions, wherein the priority given to the third objective is equal to 1-(priority of first objective + priority of second objective).

In yet another embodiment of the non-transitory computer readable medium, the plurality of feasible solutions are ordered to form an ordered solution list in each of a plurality of iterations by constructing an ideal function for each of the plurality of iterations, wherein the ideal function is constructed by taking a minimal value of (i) operational cost, (ii) migration cost, (iii) total carbon footprint considering the plurality of solutions in the solution list, and with one or more enterprise decided priority values for each of first objective, the second objective, and the third objective.

In yet another embodiment of the non-transitory computer readable medium, the plurality of feasible solutions are used with one or more other data to obtain a set of compliant solutions having (i) a minimal operational cost, (ii) a minimal migration cost, and (iii) a total carbon footprint value less than a predefined threshold, comprising iteratively performing in each of a plurality of iterations till a pre-defined number of iterations is reached: maintaining a fixed number of ordered solutions in the solution list and ordering the fixed number of ordered solutions based on an ideal function in each of a plurality of iterations; initializing a duplicate solution for each of the plurality of feasible solutions in a solution list, and replacing each UC-DC allocation in the duplicate solution by a DR criteria, latency, and carbon footprint compliant DC among a plurality of DCs, satisfying a pre-defined criterion wherein by replacing each UC-DC allocation, a new solution is obtained for each solution existing in the solution list; and including each newly generated solution in the solution list, if the newly generated solution if a determined quality of the newly generated solution is exceeding a measured quality of at least one existing solution in the solution list, and wherein while including the newly generated solution in the solution list, a solution having least value of measured quality among the solutions existing in the solution list is discarded the last solution or else discarding the newly generated solution.

In yet another embodiment of the non-transitory computer readable medium, the pre-defined number of iterations is a value in a predefined range (0,1), and is dependent on (i) a current iteration count, and (ii) the pre-defined limit on iterations, such that the value of this threshold deceases with increase in iteration count.

In yet another embodiment of the non-transitory computer readable medium, the DC is carbon footprint compliant for an UC if a resulting carbon footprint of the allocation is less than an estimated UC-carbon footprint limit, where the estimated UC-carbon footprint limit for each UC is obtained based on: (i) storage and processing resource requirements of the UC, and (ii) a predefined threshold on the total carbon footprint.

It is to be understood that both the foregoing general description and the following detailed description are exemplary and explanatory only and are not restrictive of the invention, as claimed.

BRIEF DESCRIPTION OF THE DRAWINGS

The accompanying drawings, which are incorporated in and constitute a part of this disclosure, illustrate exemplary embodiments and, together with the description, serve to explain the disclosed principles:

FIG. 1 illustrates an exemplary multi-cloud environment, in according to some embodiments of the present disclosure.
FIG. 2 illustrates an exemplary system for carbon-aware storage service selection in the multi-cloud environment, in according to some embodiments of the present disclosure.
FIG. 3 illustrates a flow diagram depicting steps involved in the process of carbon-aware storage service selection in the multi-cloud environment, using the system of FIG. 2, in according to some embodiments of the present disclosure.
FIG. 4 illustrates a flow diagram depicting steps involved in the process of obtaining a plurality of migration solutions for a plurality of combinations of the priority weights, using the system of FIG. 2, in according to some embodiments of the present disclosure.
FIG. 5 illustrates a flow diagram depicting steps involved in the process of generating an initial allocation, using the system of FIG. 2, in according to some embodiments of the present disclosure.
FIG. 6 illustrates a flow diagram depicting steps involved in the process of obtaining a set of compliant solutions from a plurality of feasible solutions, using the system of FIG. 2, in according to some embodiments of the present disclosure.
FIG. 7 illustrates an exemplary implementation diagram of the system of FIG. 2, in according to some embodiments of the present disclosure.
FIG. 8 illustrates an exemplary schematic of the process of generating the compliant solution by the system of FIG. 2, in according to some embodiments of the present disclosure.
FIG. 9 illustrates exemplary initial and migration parameters from the process of carbon-aware storage service selection in the multi-cloud environment performed by the system of FIG. 2, in according to some embodiments of the present disclosure.
FIGS. 10 through 13 depict graphs with experimental data, in according to some embodiments of the present disclosure.

DETAILED DESCRIPTION OF EMBODIMENTS

Exemplary embodiments are described with reference to the accompanying drawings. In the figures, the left-most digit(s) of a reference number identifies the figure in which the reference number first appears. Wherever convenient, the same reference numbers are used throughout the drawings to refer to the same or like parts. While examples and features of disclosed principles are described herein, modifications, adaptations, and other implementations are possible without departing from the scope of the disclosed embodiments.

Cloud service selection related decisions need to be taken by the enterprise at the cloud adoption phase as well as post cloud adoption phase. There could be various challenges post cloud adoption, such as changes in the carbon footprint target set by the organization, emerging data regulations at some geographical locations; and changes in the business requirements. Due to these challenges, the decisions need to be reviewed. Also, both sustainability and data regulation compliance are a shared responsibility in cloud. To make efficient decision on global data placement, enterprises need to consider multiple related factors. Existing approaches addressing the cloud selection and data placement do not appear to be capable of various requirements/parameters that are to be considered for optimum selection of cloud. Another challenge is that many of these parameters are subject to changes over a period of time. For example, data regulations in different countries may change from time to time. Existing approaches fail to cater to the changes, which in turn affects the cloud selection strategies.

In order to address these challenges, embodiments disclosed herein provide a method and system for carbon-aware storage service selection in the multi-cloud environment The method includes receiving information on a non-compliant initial allocation of a plurality of User Centers (UC), a plurality of enterprise user requirements, and specifications of one or more service providers as input data. Further, the initial allocation is optimized, wherein the optimization of the initial allocation includes: identifying one or more non-compliant UC locations from among the plurality of UCs; determining a) a migration cost, b) an operational cost, and c) a carbon footprint involved in migrating each of the one or more non-compliant UC locations to a Data Regulatory (DR) and latency compliant Data centre (DC) location; determining a priority weight for each of the migration cost, the operational cost, and the carbon footprint; and obtaining a plurality of migration solutions, for a plurality of combinations of the priority weights. Obtaining the plurality of migration solutions includes performing for each of the one or more non-compliant UC locations: listing a plurality of migrations to the compliant DC location for the one or more non-compliant UC locations; determining a score for each of the plurality of migrations based on the determined priority weights, by using Multi Criteria Decision Making (MCDM) technique for the one or more non-compliant UC locations; ranking the plurality of migrations based on the determined score for the one or more non-compliant UC locations; selecting a migration having highest rank from among the plurality of migrations; migrating each of the one or more non-compliant UC locations to the compliant DC location, using the selected migration as a feasible solution; and generating a list of the plurality of feasible solutions, wherein the plurality of feasible solutions are generated by selectively prioritizing a) a migration cost, b) an operational cost, and c) a carbon footprint for each solution, and wherein the plurality of feasible solutions are used as the plurality of migration solutions to optimize the non-compliant initial allocation of the plurality of User Centers (UC). By using this approach, the system and method are able to make the cloud selection related decisions based on a variety of parameters.

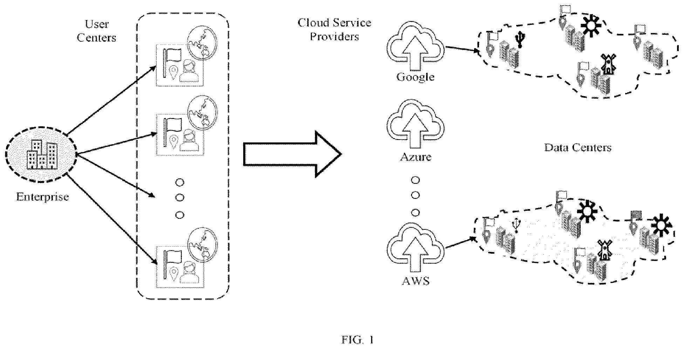

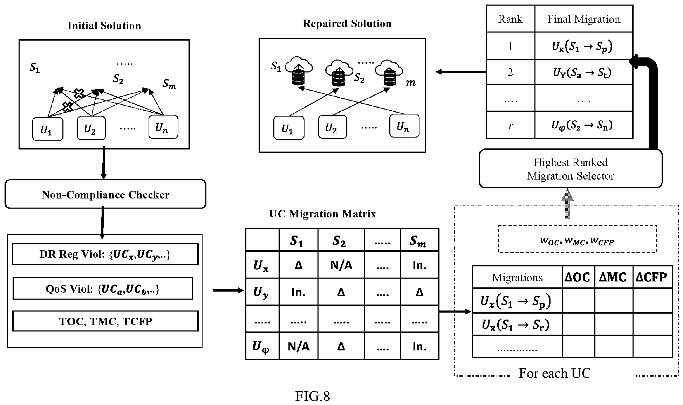

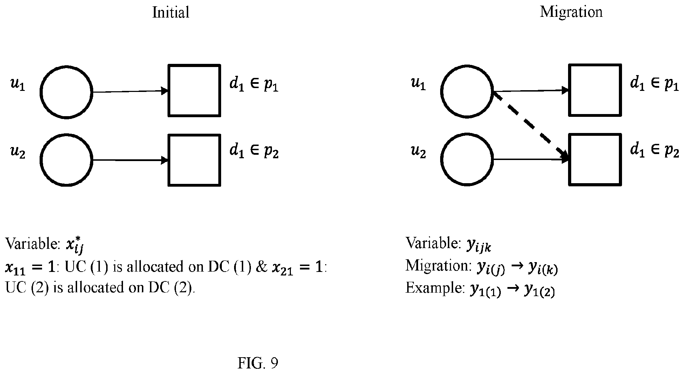

Referring now to the drawings, and more particularly to FIG. 1 through FIG. 13, where similar reference characters denote corresponding features consistently throughout the figures, there are shown preferred embodiments and these embodiments are described in the context of the following exemplary system and/or method.

FIG. 1 illustrates an exemplary multi-cloud environment, in according to some embodiments of the present disclosure. As depicted in FIG. 1, an enterprise has a plurality of User Centers (UC), and in the multi-cloud environment, there are a variety of service providers such as Google®. The cloud platform from each service provider has associated data centers. The embodiments herein disclose an approach for carbon-aware storage service selection in the multi-cloud environment, which would enable selection of appropriate storage service that satisfies a plurality of conditions and be compliant with one or more data regulations.

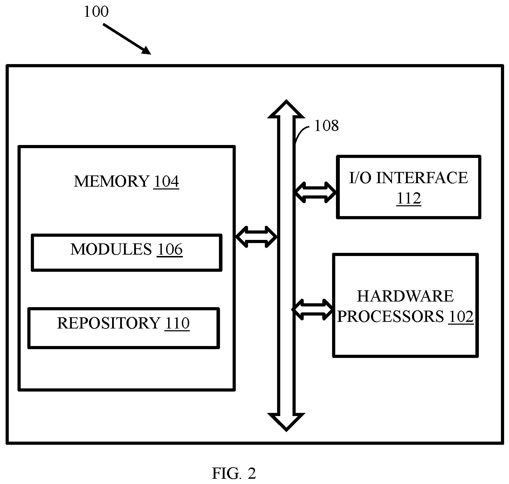

FIG. 2 illustrates an exemplary multi-cloud environment, in according to some embodiments of the present disclosure.

The system 100 includes or is otherwise in communication with hardware processors 102, at least one memory such as a memory 104, an I/O interface 112. The hardware processors 102, memory 104, and the Input /Output (I/O) interface 112 may be coupled by a system bus such as a system bus 108 or a similar mechanism. In an embodiment, the hardware processors 102 can be one or more hardware processors.

The I/O interface 112 may include a variety of software and hardware interfaces, for example, a web interface, a graphical user interface, and the like. The I/O interface 112 may include a variety of software and hardware interfaces, for example, interfaces for peripheral device(s), such as a keyboard, a mouse, an external memory, a printer and the like. Further, the I/O interface 112 may enable the system 100 to communicate with other devices, such as web servers, and external databases.

The I/O interface 112 can facilitate multiple communications within a wide variety of networks and protocol types, including wired networks, for example, local area network (LAN), cable, etc., and wireless networks, such as Wireless LAN (WLAN), cellular, or satellite. For the purpose, the I/O interface 112 may include one or more ports for connecting several computing systems with one another or to another server computer. The I/O interface 112 may include one or more ports for connecting several devices to one another or to another server.

The one or more hardware processors 102 may be implemented as one or more microprocessors, microcomputers, microcontrollers, digital signal processors, central processing units, node machines, logic circuitries, and/or any devices that manipulate signals based on operational instructions. Among other capabilities, the one or more hardware processors 102 is configured to fetch and execute computer-readable instructions stored in the memory 104.

The memory 104 may include any computer-readable medium known in the art including, for example, volatile memory, such as static random-access memory (SRAM) and dynamic random-access memory (DRAM), and/or non-volatile memory, such as read only memory (ROM), erasable programmable ROM, flash memories, hard disks, optical disks, and magnetic tapes. In an embodiment, the memory 104 includes a plurality of modules 106.

The plurality of modules 106 include programs or coded instructions that supplement applications or functions performed by the system 100 for executing different steps involved in the process of the carbon-aware storage service selection in the multi-cloud environment, being performed by the system 100. The plurality of modules 106, amongst other things, can include routines, programs, objects, components, and data structures, which performs particular tasks or implement particular abstract data types. The plurality of modules 106 may also be used as, signal processor(s), node machine(s), logic circuitries, and/or any other device or component that manipulates signals based on operational instructions. Further, the plurality of modules 106 can be used by hardware, by computer-readable instructions executed by the one or more hardware processors 102, or by a combination thereof. The plurality of modules 106 can include various sub-modules (not shown). The plurality of modules 106 may include computer-readable instructions that supplement applications or functions performed by the system 100 for the carbon-aware storage service selection in the multi-cloud environment.

The data repository (or repository) 110 may include a plurality of abstracted piece of code for refinement and data that is processed, received, or generated as a result of the execution of the plurality of modules in the module(s) 106.

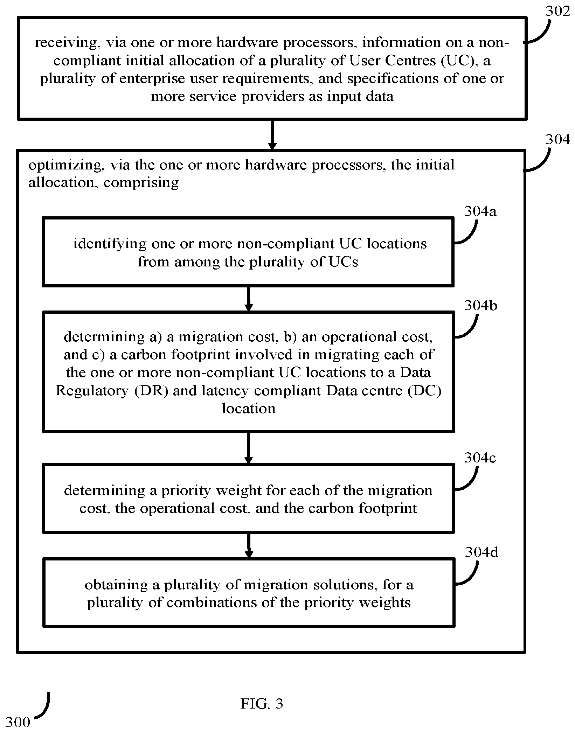

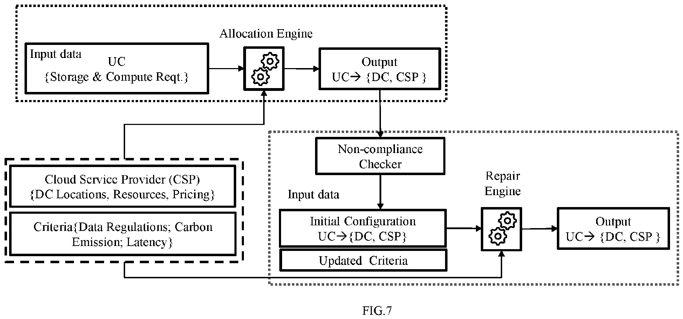

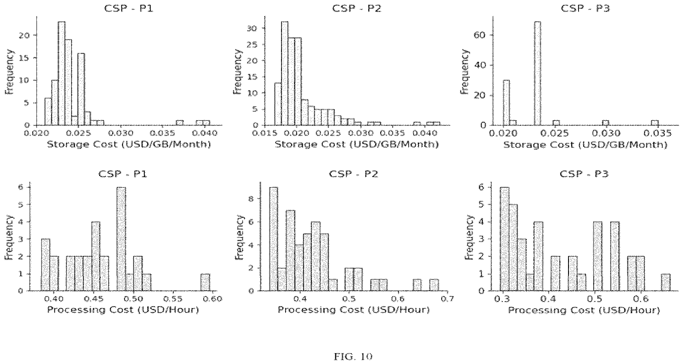

Although the data repository 110 is shown internal to the system 100, it will be noted that, in alternate embodiments, the data repository 110 can also be implemented external to the system 100, where the data repository 110 may be stored within a database (repository 110) communicatively coupled to the system 100. The data contained within such external database may be periodically updated. For example, new data may be added into the database (not shown in FIG. 1) and/or existing data may be modified and/or non-useful data may be deleted from the database. In one example, the data may be stored in an external system, such as a Lightweight Directory Access Protocol (LDAP) directory and a Relational Database Management System (RDBMS). Functions of the components of the system 100 are now explained with reference to the steps in flow diagrams in FIG. 3 through FIG. 6, the example diagrams in FIG. 7 through FIG. 9, and the graphs in FIGS. 10 through 13.

FIG. 3 is a flow diagram depicting steps involved in the process of the carbon-aware storage service selection in the multi-cloud environment by the system of FIG. 1, according to some embodiments of the present disclosure.

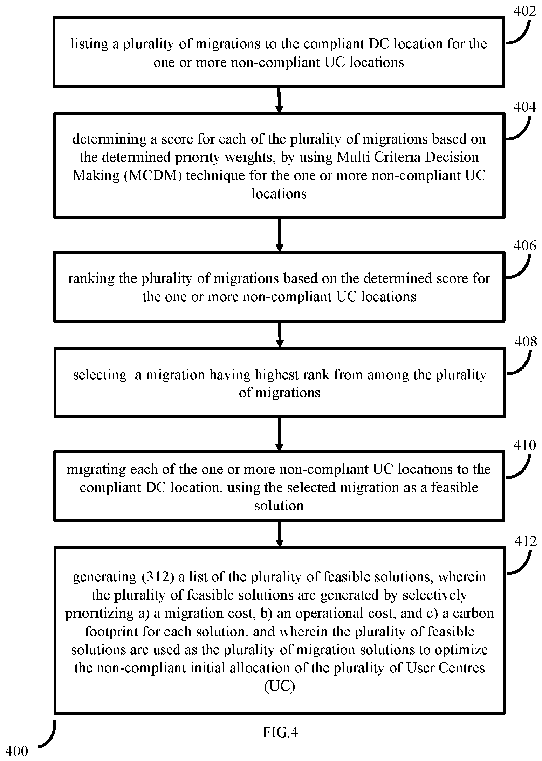

In an embodiment, the system 100 comprises one or more data storage devices or the memory 104 operatively coupled to the processor(s) 102 and is configured to store instructions for execution of steps of the method 300 by the processor(s) or one or more hardware processors 102. The steps of the method 300 of the present disclosure will now be explained with reference to the components or blocks of the system 100 as depicted in FIG. 2 and the steps of flow diagram as depicted in FIGS. 4, 5, 6. Although process steps, method steps, techniques or the like may be described in a sequential order, such processes, methods, and techniques may be configured to work in alternate orders. In other words, any sequence or order of steps that may be described does not necessarily indicate a requirement that the steps to be performed in that order. The steps of processes described herein may be performed in any order practical. Further, some steps may be performed simultaneously.

At step 302 of the method 300 in FIG. 3, the system 100 receives, via the one or more hardware processors 102, information on a non-compliant initial allocation of a plurality of User Centers (UC), a plurality of enterprise user requirements, and specifications of one or more service providers as input data. The plurality of enterprise user requirements may include details on parameters such as but not limited to User Centers storage and processing requirements. The specifications of one or more service providers may include data such as but not limited to Cloud service providers and Data Centers, storage, processing, and transfer pricing, Migration cost, Data Regulations (DR), Invocation Frequency, Carbon footprint threshold, and latency threshold. Some examples of the Data Regulations are, but not limited to, a) is the set of issues and practices related to location of (meta) data, b) related to movement of (meta) data across geographies & jurisdictions, and c) related to protection of that (meta) data against unintended access and other location-related risks. Most of the countries have own DR policies, which need to be satisfied.

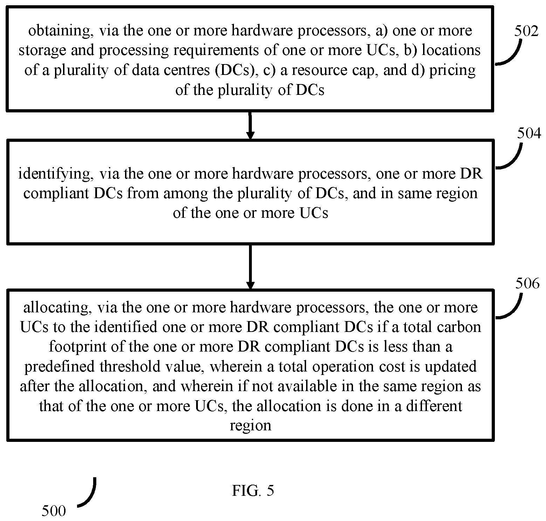

The initial allocation is generated by the system 100 by executing steps involved in method 500 in FIG. 5. These steps are explained hereafter. At step 502 of the method 500, the system 100 obtains, via the one or more hardware processors 102, a) one or more storage and processing requirements of the one or more UCs, b) locations of a plurality of data centers (DCs), c) a resource cap, and d) pricing of the plurality of DCs, as input data, from one or more appropriate sources. Further, at step 504 of the method 500, the system 100 identifies, via the one or more hardware processors 102, one or more Data regulation (DR) compliant DCs from among the plurality of DCs, and which is in same region as that of the one or more UCs. The system 100 may determine the compliance of the DC in comparison with one or more Data Regulations that may have been set by an administrator or any other authorized users. Further, at step 506 of the method 500, the system 100 allocates, via the one or more hardware processors 102, the one or more UCs to the identified one or more DR compliant DCs if a total carbon footprint of the one or more DR compliant DCs is less than a predefined threshold value. In an embodiment, the DC is carbon footprint compliant for an UC if a resulting carbon footprint of the allocation is less than an estimated UC-carbon footprint limit, where the estimated UC-carbon footprint limit for each UC is obtained based on: (i) storage and processing resource requirements of the UC, and (ii) a predefined threshold on the total carbon footprint. The system 100 iteratively performs the steps 502 through 506 for generating the initial allocation till each of the one or more UCs is allocated to a compliant DC among the one or more DCs.

After the allocation of the one or more UCs to the DR compliant DC, the system 100 calculates and updates a total operation cost. In an embodiment, if the DR compliant DC is not available in the same region as that of the one or more UCs, the system 100 searches for a DR compliant DC in a different region, and upon finding one, allocates the one or more UCs to the identified DC.

The system 100 may determine an initial allocation as the non-compliant allocation, in terms of one or more of (i) a change in DR criteria for the one or more UCs, (ii) a change in invocation frequencies (demands) for one or more UCs resulting in the violation of pre-defined Quality of Service (QoS) thresholds, and (iii) a change in carbon footprint threshold for the allocation where the current total carbon footprint of the allocation violates the new threshold on carbon footprint, which may be monitored over a period of time. For example, if a UC is not DR compliant and a measured latency of UC-DC is exceeding a pre-defined threshold value, then the system 100 may identify the UC as non-compliant UC.

Referring back to method 300, at step 304 of the method 300, the system 100 optimizes the initial allocation, via the one or more hardware processors 102. Steps 304a through 304e in FIG. 3 depict steps involved in optimizing the initial allocation, and are explained hereafter. At step 304a, the system 100 identifies one or more non-compliant UC locations from among the plurality of UCs. In an embodiment, the system 100 may determine the one or more UCs as non-compliant, with respect to one or more of the (i) change in DR criteria for the one or more UCs, (ii) change in invocation frequencies (demands) for one or more UCs resulting in the violation of pre-defined Quality of Service (QoS) thresholds, and (iii) change in carbon footprint threshold for the allocation. Further, at step 304b, the system 100 determines a) a migration cost, b) an operational cost, and c) a carbon footprint involved in migrating each of the one or more non-compliant UC locations to a Data Regulatory (DR) and latency compliant Data centre (DC) location.

Given a solution which is a mapping between UCs and DCs, the values of metrics (i.e., the migration cost, the operational cost, and the carbon footprint) are obtained as:

(i) migration cost: For each User Centre (UC), migration cost is evaluated as product of migration cost per unit of data and size of UC data.

(ii) operational cost: Operational cost is sum of transfer cost, processing cost and storage cost. They are evaluated as:

Transfer cost: product of transfer cost per unit of data and size of UC data
Processing cost: product of processing cost per unit of time and total processing time for an UC
Storage cost (tiered): product of data stored in tier and cost of the tier

(iii) Carbon footprint (CFP): CFP is contributed by two factors: data storage and data processing. Hence total CFP will be the CFP contributed in data storage and processing.

CFP for storage = product of (amount of data to be stored), (duration of storage) and (power consumption per unit of time).
CFP for processing = product of number of cores required for processing and power required by a core. In addition, the idle power is taken in consideration.

Further, at step 304c, the system 100 determines a priority weight for each of the migration cost, the operational cost, and the carbon footprint. Process of determining the priority weight for each of the migration cost, the operational cost, and the carbon footprint involves: i) a priority given to a first objective in a pre-defined range (0,1), wherein the priority increases in arithmetic progression for each of the solution, ii) a priority given to a second objective for each of the plurality of feasible solutions, wherein the priority to the second objective is selected in a pre-defined range of (0, 1- priority of the first objective), and iii) priority given to a third objective for each of the plurality of feasible solutions, wherein the priority given to the third objective is equal to 1-(priority of first objective + priority of second objective). Here, the first objective, the second objective, and the third objective refers to one of the migration cost, the operational cost, and the carbon footprint, in no particular order.

In an embodiment of the method, the priority weight for each of the migration cost, the operational cost, and the carbon footprint is determined such that sum of the priority weights is 1.

Further, at step 304d, the system 100 obtains a plurality of migration solutions, for a plurality of combinations of the priority weights. Various steps involved in the process of obtaining the plurality of migration solutions by the system 100 are depicted in method 400 in FIG. 4, and are explained hereafter. At step 402 of the method 400, the system 100 lists a plurality of migrations to the compliant DC location for the one or more non-compliant UC locations. Further, at step 404 of the method 400, the system 100 determines a score for each of the plurality of migrations based on the determined priority weights, by using a Multi Criteria Decision Making (MCDM) technique for the one or more non-compliant UC locations. The MCDM technique is explained below:

For a non-compliant UC, there are multiple compliant DCs for migration. Each migration is characterized by three values (i) migration cost, (ii) operational cost, (iii) total carbon footprint. Then steps involved in the MCDM technique are:

I) For each migration, listing values of three objectives: migration cost, operational cost, total carbon footprint.
II) Obtain the minimal of migration cost, operational cost and carbon footprint considering three objectives considering all migrations.

III) For each migration: Divide the minimal of each objective by its objective value and the resultant value is multiplied by priority weight for that objective. The values for the three objectives are summed up to obtain a weighted sum value.

IV) The migrations are ranked based on the weighted sum value. The highest ranked migration gets highest scored.

V) The migration is performed to the DC for the highest ranked migration.

Further, at step 406 of the method 400, the system 100 ranks the plurality of migrations based on the determined score for the one or more non-compliant UC locations. In various embodiments, the system 100 may rank the plurality of migrations in ascending or descending order. Further, at step 408 of the method 400, the system 100 selects a migration having highest rank from among the plurality of migrations. Highest rank or highest score for a migration indicates that the migration is most suitable in terms of compliance as well as cost factors. A particular migration having low score and in turn low rank would indicate that the migration being considered is less feasible in terms of the considered parameters/aspects. In an embodiment, high/low in the context of score/rank is in comparison with a reference threshold, which could be a pre-defined value. Further, at step 410 of the method 400, the system 100 migrates each of the one or more non-compliant UC locations to the compliant DC location, using the selected migration as a feasible solution. Further, at step 412 of the method 400, the system 100 generates a list of the plurality of feasible solutions, wherein the plurality of feasible solutions are generated by selectively prioritizing a) a migration cost, b) an operational cost, and c) a carbon footprint for each solution, and wherein the plurality of feasible solutions are used as the plurality of migration solutions to optimize the non-compliant initial allocation of the plurality of User Centers (UC). The system 100 performs the steps 402 through 412 for each of the one or more non-compliant UC locations.

In an embodiment, the system 100 may order the plurality of feasible solutions to form an ordered solution list in each of a plurality of iterations by constructing an ideal function for each of the plurality of iterations, wherein the ideal function is constructed by taking a minimal value of (i) operational cost, (ii) migration cost, (iii) total carbon footprint considering the plurality of solutions in the solution list, and with one or more enterprise decided priority values for each of first objective, the second objective, and the third objective.

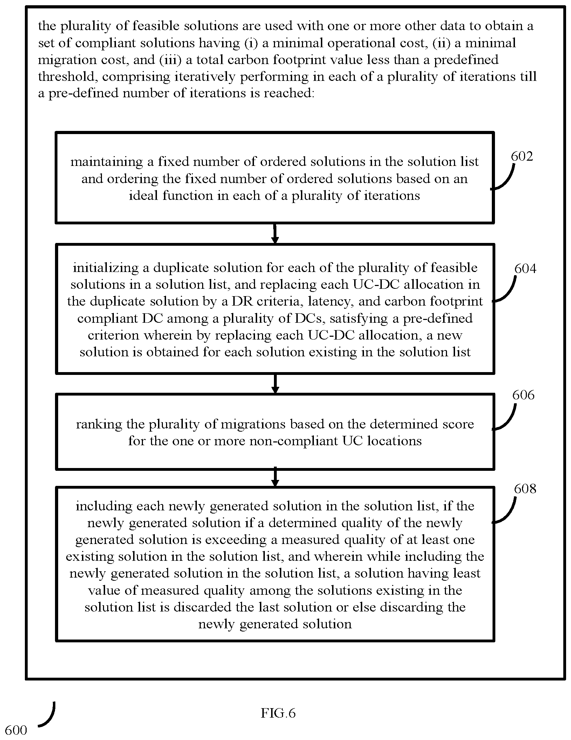

In another embodiment, the plurality of feasible solutions are used with one or more other data to obtain a set of compliant solutions having (i) a minimal operational cost, (ii) a minimal migration cost, and (iii) a total carbon footprint value less than a predefined threshold. Various steps involved in the process of obtaining the set of compliant solutions are depicted in method 600 in FIG. 6 and are explained hereafter. At step 602 of the method 600, the system 100 maintains a fixed number of ordered solutions in the solution list and also orders the fixed number of ordered solutions based on an ideal function (alternately referred to as 'distance function') in each of a plurality of iterations. For the solution list in each iteration, an ideal function is obtained. Each solution (UC->DC mapping) in the solution list has three values: (i) migration cost, (ii) operational cost, (iii) total carbon footprint. The ideal function is constructed by taking the minimal of the three objectives considering all solutions in the solution list. The ideal solution is the solution having highest value of quality from among the solutions in the solution list, wherein the quality of each solution is determined in terms of values of the three objectives. The ideal function is used as a reference to determine to what each other solution deviates from the ideal solution. Further, at step 604 of the method 600, the system 100 initializes a duplicate solution for each of the plurality of feasible solutions in a solution list, and replaces each UC-DC allocation in the duplicate solution by a DC that is compliant with respect to a defined DR criteria, latency, and carbon footprint, from among the plurality of DCs. The new solution obtained in this manner for each solution existing in the solution list satisfies a pre-defined criterion. At this stage, the system 100 measures quality of the newly generated solution in terms of the objectives, and compares the measured quality is exceeding a measured quality of at least one existing solution in the solution list. If the measured quality of the new solution is determined as exceeding the measured quality of at least one existing solution in the solution list, then the system 100 includes the newly generated solution in the solution list. While including the new solution to the solution list, an existing solution having value of the measured quality lower than that of the new solution is removed from the solution list, i.e., replaced by the new solution. In an embodiment, more than one existing solution in the solution list may have a measured quality value less than that of the new solution. In that case, the system 100 replaces the existing solution having least value of the measured quality. If none of the solutions existed in the solution list has the measured quality value less than that of the new solution, then the system 100 discards the new solution. The system 100 repeats step 602 through 612 in a plurality of iterations till a pre-defined number of iterations is reached. In an embodiment, the pre-defined number of iterations is a value in a predefined range (0,1), and is dependent on (i) a current iteration count, and (ii) the pre-defined limit on iterations, such that the value of this threshold decreases with increase in iteration count.

Algorithmic explanation of method 300:

In an embodiment, the system 100 models the storage selection process in the multi-cloud environment as below:

*a) Optimization Model for Repairing the Allocation*

The term 'repair' in the context of the embodiments disclosed herein represents a step of making a con-compliant allocation a compliant one by generating appropriate solution(s). Consider an enterprise with a set of user centers U = {$u_1$, $u_2$, ..., $u_n$} belonging to multiple geographic regions {$R$}. Let $P$ = {$p_1$,$p_2$, ..., $p_m$} be the set of cloud service providers (CSPs). Let $K$ = U$_{p \in P}$ $K_p$, where $K_p$ = {$d_1$,$d_2$, ..., $d_p$} be the set of data centers (DCs) of the service provider ($p$). Each data centre belongs to a geographical location.

*Model decision variables:* A decision variable $x_{ik}$ = 1, if UC *(i)* is allocated to DC *(k)*, otherwise 0. A migration decision variable $y_{ijk}$ = 1, if UC *(i)* is migrated from DC *(j)* to DC *(k)*, otherwise 0. Most of the Cloud Storage Providers (CSPs) have volume-based tiered pricing and the pricing at each DC could be different. The decision variable

$I_{kb} \in \left[ 0, \left( q_k^b - q_k^{b''} \right) \right]$ indicates the amount of data allotted in tier *(b)* of DC *(k)*, where $q_k^b$ denotes the data break point for DC *(k)* for tier *(b)* (TB). Variable $s_{kb}$ = 1, if $b^{th}$ tier is used for DC *(k)* for storing data, otherwise 0.

Other Notations:

| | |
|---|---|
| $Q_i$ | Amount of user data at UC ($i$) (TB) |
| $C_{ijk}^M$ | Migration cost between DC ($j$) & DC ($k$) (USD/GB) |
| $C_{ik}^T$ | Transfer cost between UC ($i$) & DC ($k$) (USD/GB/Month) |
| $c_k^b$ | Storage cost at DC ($k$) for tier ($b$) (USD/GB/Month) |
| $h_i$ | Average processing hours for UC ($i$) (per month) |
| $c_k^p$ | Processing cost at DC ($k$) (USD/Hour) |
| $H$ | Decision Horizon |

*Objective*: The objective is to minimize the total cost, which comprises migration cost, and operational cost. As operational cost maybe incurred on pre-defined intervals (for example, on a monthly basis), while migration cost maybe relatively one-time cost. A decision horizon factor (H) is considered. Further, operational cost includes data transfer, storage, and processing cost.

$$Minimize\ Total\ Cost = \sum_{i \in U} \sum_{j \in K} \sum_{k \in K} y_{ijk} Q_i\, C_{ijk}^M +$$

$$\left( \sum_{i \in U} \sum_{k \in K} x_{ik} Q_i C_{ik}^T + \sum_{k \in K} \sum_{b \in B} I_{kb} c_k^b + \sum_{i \in U} \sum_{k \in K} x_{ik} h_i c_k^p \right) * H$$

$$--- (1)$$

*Subjected to constraints:*

*Migration and Allocation constraints:*

Constraint (2) ensures that each UC can be re-allocated to maximally one DC i.e., UC (i) data which is currently placed on DC (j) can be migrated to *only* one DC *(k)*. While Constraint (3) states that each UC *must* be allocated to exactly one DC.

$$\sum_{j \in K} \sum_{k \in K} y_{ijk} = 1\ \ \forall\, i \in U \qquad (2)$$

$$\sum_{k \in K} x_{ik} = 1 \ \forall \, i \in U \tag{3}$$

*Utilization and Capacity constraints:* The storage and processing capacity at each DC for an enterprise is limited. Constraints (6) and (7) ensure that the capacity for storage and processing at each DC is not exceeded, where Cap_$S_k$ and Cap_$P_k$ are the data storage (TB) and processing capacities (cores) at DC (k) respectively. Constraint (4) computes the data stored at each DC (k), represented by integer variable $z_k \in [0, \text{Cap}_{S_k}]$. Constraint (5) determines the number of cores utilized at each DC (k) in slot (t) captured by integer variable $v_k^t \in [0, Cap\_P_k]$. Parameter $N_i^t$ denotes the number of cores required by UC (i) in time slot *(t)*. And $T = \{t_1, t_2, ..., t_{\Delta t}\}$ denotes the set of time slots (day).

$$\sum_{i \in U} x_{ik} Q_i = z_k \ \forall \, k \in K \tag{4}$$

$$\sum_{i \in U} x_{ik} N_i^t = v_k^t \ \forall \, k \in K \,\&\, t \in T \tag{5}$$

$$z_k \leq Cap\_S_k \ \forall \, k \in K \tag{6}$$

$$v_k^t \leq Cap\_P_k \ \forall \, k \in K \,\&\, t \in T \tag{7}$$

*b)Data distribution constraints:*

Constraint (8) distributes the data among multiple CSPs with proportion ($\delta_p$), where $\delta_p \in [0,1]$ is the fraction of data allotted to CSP *(p)*.

$$\sum_{k \in K_p} z_k \leq \delta_p \cdot \sum_{i \in U} Q_i \ \forall \, p \in P \tag{8}$$

*Tier pricing constraints:*

Constraint (9) captures data stored at each DC (*k*). Constraints (10) and (11) distribute data in tiers for each DC (*k*). Constraints (12) and (13) limit the amount of data to be allotted for each DC *(k)*. Tiers *b, b',* and *b"* are indexed by $b' = (b + 1)^{th}$ and $b" = (b - 1)^{th}$ from the set of tiers (*B*).

$$\sum_{b \in B} I_{kb} = z_k \ \forall \, k \in K \tag{9}$$

$$I_{kb} \leq \left( q_k^b - q_k^{b''} \right) \cdot s_{kb} \ \forall \, k \in K \,\&\, b \in B \tag{10}$$

$$I_{kb} \geq \left( q_k^b - q_k^{b''} \right) \cdot s_{kb'} \ \forall \, k \in K \,\&\, b \in B \tag{11}$$

$$z_k \geq q_k^b \cdot s_{kb'} \ \forall \, k \in K \,\&\, b \in B \tag{12}$$

$$z_k \leq q_k^b \cdot (1 - s_{kb'}) + M \cdot s_{kb'} \ \forall \, k \in K \,\&\, b \in B \tag{13}$$

*Data regulation constraint:*

Constraint (14) ensures the data regulatory compliance while allocating UCs to DCs. Parameter $\beta_{ik} \in \{0,1\}$ captures DR regulation between UC ($i$) and DC $(k)$, where $\beta_{ik} = 0$ indicates that regulations at country of UC ($i$) do not permit to store their citizen data at DC location (k).

$$x_{ik} \leq \beta_{ik} \ \forall \ i \in U \ \& \ k \in K \qquad (14)$$

*Variable relationship constraints:*

Constraint (15) ensures that UC can be migrated only from those DCs where it was previously allocated, where $x_{ij}^*$ denotes the current configuration of UC ($i$) at DC ($j$). Constraint (16) ensures that UCs can be migrated only to those DCs that are preferred by the model. For example, $x_{ik} = 0$, it means DC $(k)$ is not selected for allocation in the model, then UC (i) cannot migrate to DC $(k)$, hence $y_{ijk}$ must be 0.

$$y_{ijk} \leq x_{ij}^* \ \forall \ i \in U, j \in K \ \& \ k \in K \qquad (15)$$

$$y_{ijk} \leq x_{ik} \ \forall \ i \in U, j \in K \ \& \ k \in K \qquad (16)$$

*Latency constraint:*

Latency is the average response time to access the data from DC $(k)$ for UC ($i$). Enterprise has stringent criteria on maximum allowable latency ($\lambda_i$) (milliseconds) for serving its users. Constraint (17) prohibits selecting data centers which exceeds latency threshold value. Where, $F_i$ is the average invocation frequency at UC (i) for accessing data per month. And $L_{ik}$ denotes the latency (ms) between UC (i) and DC $(k)$.

$$\sum_{k \in K} x_{ik} F_i L_{ik} \leq \lambda_i \ \forall \ i \in U \qquad (17)$$

*Carbon footprint constraint:*

Carbon emission at data center is directly proportional to the power consumed. There are many factors contributing to the energy consumption at a data center, for example, energy required for cooling, thermal etc. Average carbon emission ($CO_2^k$) at ($k^{th}$) data center also depends on the proportion of energy supply obtained from renewables and power grids. The procedure for the power consumption and carbon emission calculations at data centers, is obtained from state of the art approaches. As from the enterprise perspective, energy required for storage and compute, plays a significant role in carbon footprint estimation. The operating power required ($E_{req}^k$) at data center $(k)$ is computed in terms of storage and compute requirements as follows:

$$E_{req}^k = \eta_r \cdot \left( E_{store} \cdot \Delta T \cdot z_k \right.$$

$$\left. + \sum_{t \in T} \left( E_k^{idle} + E_{core} \cdot v_k^t \right) \right)$$

$$(18)$$

Where,

$\eta_r$ is the power usage effectiveness in region (r).

$\Delta T$ is the duration of storage.

$E_{store}$ is the power consumption (Watt/TB) in data storage.

$E_k^{idle}$ is the power required (Watt) in the idle state.

$E_{core}$ is the power required (Watt) for a core during workload processing on virtual machine (VM).

Constraint (19) states that the total CFP contributed by all the UCs must not exceed a carbon threshold value ($\xi$). Parameter $\xi$ is defined as the maximum allowable carbon footprint (tons/month) for the network, which is set by the enterprise.

$$\sum_{k \in K} CO_2^k E_{req}^k \leq \xi \qquad (19)$$

The optimization model for repair of data placement is a NP-hard multi-objective optimization model with multiple stringent constraints. Finding feasible solution in a short time for large problem instances by optimizers becomes computationally expensive. Hence, the system 100 uses a search-based procedure, i.e., the method 300, for generating the compliant solutions, which is explained below:

In the context of the embodiments disclosed herein, a solution is said to be non-compliant if there exists at least one non-compliant $(u_i, d_j)$ mapping in the solution. A pair $(u_i, d_j)$ is non-compliant if:

(i) $\beta(u, d) = 0$, which means data regulation at UC is violated. The reason being user country does not permit the data to be stored or processed at DC (*d*). (ii) $lat(u, d) > \lambda_u$, which means latency threshold is violated.

Algorithm 1 below depicts process of generating compliant initial solutions using a multi-criterion ranking method, and Algorithm 2 depicts a procedure for fine-tuning the initial solutions.

*Constructing Compliant Solutions using Multi-criteria Ranking:* The procedure takes the non-compliant solution ($S_0$), as an input (refer Algorithm 1). To obtain a compliant solution, first step is to identify compliant DCs for each of the non-compliant UC. Next, a migration matrix is constructed, where changes in operational cost ($\Delta OC$), migration cost ($\Delta MC$), and carbon footprint ($\Delta CFP$) for each non-compliant UC are computed, if it is migrated to a compliant DC (lines 4-9). The next step is to provide weights (priority) to each objective function and select the mapping with the highest rank (lines 12-15), thereby finding the most appropriate DC to migrate non-compliant UC. After migrating all non-compliant UCs the feasible solutions are obtained. The procedure is repeated with different combinations of priority weights to obtain several compliant solutions (line 10).

| **Algorithm 1:** |
| --- |
| 1.   **Input**: non-compliant solution $S_0$ |
| 2.   Initialize solution list: $Slist = []$ |
| 3.   List non-compliant UCs in $S_0$ |
| 4.   **for** each non-compliant UC: |
| 5.      **for** each DC: |
| 6.         Check for DR, latency compliance |
|            If compliant DC found: |
| 7.         Compute      UC    $\rightarrow$    DC $(\Delta OC, \Delta MC, \Delta CFP)$ |
| 8.      **End for** |
| 9.   **End for** |
| 10.  **while** $(soln\_cnt <= max\_soln)$: |
| 11.     Select priority weights $(w_{OC}, w_{MC}, w_{CFP})$ |
| 12.     **for** each non-compliant UC: |
| 13.        Rank    DCs    using    MCDM $(\Delta OC, \Delta MC, \Delta CFP)$ |
| 14.        Select DC with highest rank |
| 15.     **End for** |
| 16.     Obtain new solution and update $Slist$ |
| 17.  **End while** |
| 18.  **Output**: $Slist$ //List of Compliant Solutions |

However, using multi-criteria ranking method for initial solution generation can result in sub-optimal solution. To improve the solution quality, the generated solution is fine-tuned using the steps depicted in the Algorithm 2.

*Creating List of Compliant Data Centers:* Algorithm 2 takes the set of compliant solutions (*Slist*) obtained by the algorithm 1 as input. *Slist* contains *N* number of solutions. For each UC, a list ( $DC_{UC}^*$ ) of compliant DCs (lines 2-4) is obtained. The list is created based on data regulation, latency, and carbon threshold value. Generally, carbon footprint target for cloud computing is set by the enterprise considering all the user centers and regions. To effectively reduce the CFP and to make carbon-aware data placement decisions, the maximum permissible carbon footprint (carbon threshold) for each UC region/location is estimated considering its storage and compute requirements. The carbon threshold for a UC in Equation (21), where *data$_u$* and *core$_u$* represent the data and core resource requirement for a user center (*u*).

$$\psi_u = \left( \frac{data_u}{\sum_{u \in U} data_u} + \frac{core_u}{\sum_{u \in U} core_u} \right) \cdot \xi \quad (21)$$

*Procedure for Ordering Quality Solution*: To evaluate the quality of generated solutions and to decide, which solution to accept or to reject, a distance function is required. As the problem is a multi-objective problem, there are several solutions. For ordering the solutions based on the quality, its distance from an ideal solution id measured. In this approach, the ideal objective values for each criterion are obtained from the complete solution set (*Slist*) as given in the Equation (22). Then, a Euclidean distance between each new solution and $f_{gen}^*$ and order the solutions (line 7) is computed.

$$f_{gen}^* = \{min(TOC_{gen}), min(TMC_{gen}), min(TCFP_{gen})\} \quad (22)$$

| | Algorithm 2 |
|---|---|
| 1. | **Input**: $Slist, MaxGen, N$ |
| 2. | **for** each UC: |
| 3. | List of compliant and low carbon DCs for each UC: $DC^*_{UC}$ |
| 4. | **End for** |
| 5. | **Initialize**: $\beta_0, \beta, \phi$ |
| 6. | Obtain ideal solution from $Slist$ : $f^*_{gen}$ |
| 7. | $dist\_order(Slist)$: Order solutions based on distance from $f^*_{gen}$ |
| 8. | **while** $(gen \leq MaxGen)$: |
| 9. | $\alpha = \beta_0 - \beta^2(gen/MaxGen)^\phi$ |
| 10. | **for** each $S_i$ in $Slist$: |
| 11. | Initialize $S'_i = S_i$ |
| 12. | **for** each UC in $S'_i$: |
| 13. | Obtain current DC: $DC_x$ |
| 14. | Obtain $val = rand(0, 1)$ |
| 15. | **if** $val \leq \alpha$: |
| 16. | $DC_y = rand(DC^*_{UC})$: Select new DC |
| 17. | Replace $[UC, DC_x]$ with $[UC, DC_y]$ |
| 18. | **End if** |
| 19. | **End for** |
| 20. | **Compute** $ObjVal\ (S'_i)$ |
| 21. | Compute $pos(S'_i, Slist)$: position of $S'_i$ in $Slist$ |
| 22. | **If** $pos(S'_i, Slist) \leq N$: |
| 23. | Include $S'_i$ in $Slist$ in right position |
| 24. | Discard last solution at $pos(.) = N + 1$ from $Slist$ |
| 25. | **End If** |
| 26. | **End for** |
| 27. | Update $f^*_{gen}$ |
| 28. | Update $dist\_order(Slist)$ |
| 29. | **End while** |
| 30. | **Output**: $Slist$ |

To improve the initial solution quality, the system 100 explore the neighborhood by randomization. The existing solutions are randomized using probability value ($\alpha$) to obtain new solutions. The randomization probability is initially high and further as the generation progresses the value $\alpha$ decreases (line 9). This helps to generate diverse solutions at the start and later, do intensification.

For each generation, randomization probability ($\alpha$) is obtained (line 9) using parameters $\beta_0 = 0.9$, $\beta = 0.9$, and $\phi = 2$. Each initial solution is randomized to obtain a new solution (lines 10-25). UC-DC pair in the solution is selected for repair with the probability value *(val)* (lines 12-14). If selected, user center's current DC allocation is replaced by a new DC, which is chosen with uniform distribution from the list $DC^*_{UC}$ (line 15-18). The process is repeated for each UC and a new solution is generated. The new solution is included in *Slist*, if it is better than at least one solution in *Slist* (lines 20-24). If selected, the last solution in *Slist* is discarded. *Slist* maintains N number of solutions in each generation. The process is repeated till completion of *(MaxGen)* generations/iterations.

<u>Experimental Data:</u>

a) Experimental Settings:-

Due to customer data confidentiality, the results are demonstrated on synthetically generated data set. The data related to Cloud service providers (CSPs) has been obtained from three cloud service providers. Data pertaining to storage and processing cost, as well as carbon emission details are obtained from published data. Names of the providers are anonymized and are represented as $\{P_1, P_2, P_3\}$.

Data of 50 user centers is generated synthetically. The UCs are spread across six continents. Table I describes the basic stats of different CSPs and user centers. Number of data centers along with data centers with low carbon emission values for each of the service provider belonging to different geographic regions are also given in Table. 1. The data centers where the emission values are lower than 250 gram/KWhr are considered as Low carbon emission centers. For example, CSP $P_3$ has highest number of low carbon data centers (DCs).

TABLE I. Geographical Data centers and User centers count

| Geography | Total DC count (DC with low carbon) | | | User Centers |
|---|---|---|---|---|
| | $P_1$ | $P_2$ | $P_3$ | |
| Africa | 1 (0) | 2 (0) | 0 (0) | 3 |
| Asia | 11 (0) | 14 (0) | 11 (1) | 18 |
| Australia | 2 (0) | 4 (0) | 2 (0) | 4 |
| Europe | 8 (6) | 14 (9) | 11 (8) | 13 |
| North America | 5 (1) | 11 (2) | 11 (6) | 11 |
| South America | 1 (1) | 2 (2) | 2 (1) | 1 |
| Total count | 28 (8) | 47 (13) | 37 (15) | 50 |

The data generation procedure for other attributes is discussed below:

a. User data ($Q_i$) (TB) was generated using discrete uniform distribution. The intervals were correlated (+1) with the population of six continents: {Asia: (400, 600), Africa: (300, 400), Europe: (200, 300), North America: (100, 200), South America: (50, 100), Australia: (10, 50)}.

b. Number of cores in each time slot was generated using discrete uniform distribution in the interval (100, 10000).

c. Average processing hours were generated with discrete uniform distribution in the range (24, 720). The data is correlated (+1) with the total number of cores used by each user center in time $\Delta T$ = 1 month (30 days).

d. Invocation frequency for each user center was generated using discrete uniform distribution in interval (500, 1000).

e. Latency between user centers and data centers was calculated based on the geographic distance between them. The distance between two geographic locations was computed using their latitude and longitude values obtained from appropriate sources. A conversion factor of 0.01 ms/Km was considered for a round trip latency.

f. Data storage capacity at each data center was generated using discrete uniform distribution in the interval (10000, 25000) and data processing capacity (number of cores) are generated in the range (250000, 300000).

g. Transfer cost between user and data centers was generated using uniform distribution in the interval (0.01, 0.1).

FIG. 10 displays the distribution of costs (storage and processing cost) and carbon footprint values for each CSP. CSPs $P_1$ and $P_2$ have tier pricing structure with three tiers, while CSP $P_3$ has a linear pricing structure for storage cost. There are multiple categories of storage and processing on VMs for each of the CSP. Pricing structure of standard storage class were considered. For processing of workloads submitted by users, optimized VMs with 8 cores and 16 GB of memory were considered.

Migration cost among data centers was generated using normal distributions in the following way:

∘ Within the same CSP, the migration cost was generated using parameters ($\mu$ = 0.50, $\sigma$ = 0.10).
∘ Across service providers, the migration cost was generated using parameters ($\mu$ = 0.75, $\sigma$ = 0.15).

For DR regulation data, a strict data localization and GDPR policy were considered. Strict data localization necessitates that user of the same country must be assigned to data centers within the same country while GDPR permits the transfer of data within European Union countries.

$$E_k^{idle} = 100$$

The values of parameters $E_{store}$ = 1.2 (Watt/TB), (Watt), and $E_{core}$ = 10 (Watt) were considered.

The decision horizon (H) of 6 months was considered.

The experimentation was performed on AMD RYZEN - E495 I5 CPU @1.5 GHz with 8 GB RAM and 256 GB SSD of memory. In this approach, a mathematical integer optimization model was solved using open-source solver SCIP contributed by OR Tools by Google developers.

Experimentation Results

Various results pertaining to single and multiple CSP selection with CFP minimization, repair with minimal migration cost, data distribution across CSPs and repair algorithm in this section are demonstrated.

*B. CSP Selection based on minimal CFP*

Table II describes the results on minimal CFP and operational cost that can be achieved by selecting single and multiple CSPs. Results were obtained by solving the optimization problem as detailed above, with the single objective of minimizing carbon footprint. Later, the optimization problem was solved with the objective of minimizing the operational cost and using the CFP obtained in the first phase as restriction in the optimization problem. The other criteria of capacity, latency, and data regulations were kept as stringent constraints, which needed to be met.

TABLE II. CSPs with *min* CFP and *min* Operational cost

| Cloud service providers (CSPs) | Carbon footprint (ton/month) | Operational cost (M-USD/Month) | Data distribution (%) |
|---|---|---|---|
| $\{P_1\}$ | 24.00 | 0.9643 | {100.00} |
| $\{P_2\}$ | 24.00 | 0.7898 | {100.00} |
| $\{P_3\}$ | 13.70 | 0.9629 | {100.00} |
| $\{P_1, P_2\}$ | 19.50 | 0.7846 | {29.82, 70.18} |
| $\{P_1, P_3\}$ | 10.90 | 0.9216 | {42.34, 57.66} |
| $\{P_2, P_3\}$ | 10.20 | 0.8340 | {70.22, 29.78} |
| $\{P_1, P_2, P_3\}$ | 10.20 | 0.8340 | {0.00, 70.22, 29.78} |

Results from the Table II states that among the three single CSPs, minimal CFP can be achieved by selecting $P_3$ provider for the enterprise compute and storage requirements. However, if the enterprise goal is to operate with minimal operational cost, in that scenario, service provider $P_2$ could be selected. But by selecting $P_2$ service provider, the CFP is higher by 75.18%. Further, it was observed that the results of service providers $P_2$ and $P_3$ dominated results of CSP $P_1$ for the enterprise requirements. One reason could be due to higher number of data centers in $\{P_2, P_3\}$ compared to $P_1$.

Best multi-cloud combination for the enterprise requirements was found to be $\{P_2, P_3\}$ with minimal CFP. Last column in the Table III displays the data distribution across the selected CSPs. The model achieved minimal carbon footprint and operational cost on the approximate distribution of 70% and 30% data across CSPs $P_2$ and $P_3$ respectively. CSP combination $\{P_1, P_2, P_3\}$ gives the same results as combination $\{P_2, P_3\}$ as there was no data distributed at $P_1$.

Table III demonstrates the implications of various tradeoffs on CFP and operational cost with CSP combination $\{P_1, P_2, P_3\}$. The row and column with value '0' indicates that the criteria were ignored, and '1' means criteria is considered, while solving the optimization problem. When both latency and DR criteria were considered, finding economical solution with lower CFP became difficult. As due to data regulation restriction selecting green data centers can be prohibited, similarly due to latency constraint few economic data center selection was restricted.

TABLE III. Tradeoffs: Data Regulation, Latency, CFP, and Cost

| La | **Data Residency (DR) Regulation** | |
|---|---|---|
| | 0 | 1 |

|   | CFP (ton/month) | Operational Cost (M-USD/month) | CFP (ton/month) | Operational Cost (M-USD/month) |
|---|---|---|---|---|
| **0** | 2.0 | 0.5817 | 9.5 | 0.6573 |
| **1** | 4.9 | 0.7062 | 10.2 | 0.8340 |

*C. Tradeoff between operational cost and carbon footprint*

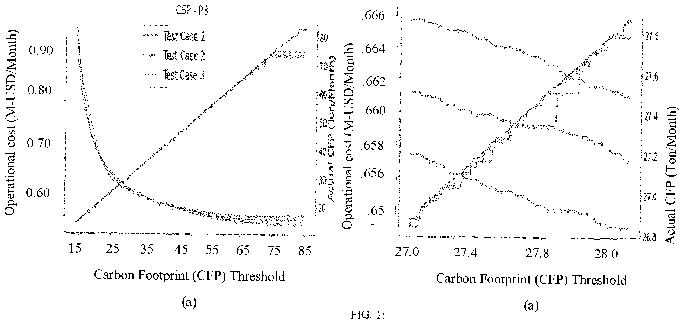

It was observed that minimum CFP could be achieved by selecting $\{P_3\}$ service provider for enterprise storage and compute requirements. However, there existed a trade-off between CFP and operational cost. With minimum CFP target, an enterprise may need to pay high operational cost. As the CFP target was relaxed, the operational cost reduced significantly. This trade-off between the operational cost and carbon footprint is demonstrated in sub-figures (a) and (b) in FIG. 11.

The results are demonstrated on the three test cases. In each test case, the data set was changed for each of the 50 user centers, while maintaining its distribution and parameters. Service provider $P_3$ data centers, pricing and carbon emission was considered. The modelled problem was solved considering the objective of operational cost. The model was bounded by CFP threshold ($\xi$). CFP threshold value ($\xi$) was varied starting from its minimum value till the point where there is no further change in operational cost. It was observed that for stiff CFP threshold ($\xi$), operational cost is very high and as threshold is relaxed, cost is reduced. There exists multiple feasible solution in the given range of CFP threshold values. This scenario was demonstrated considering the CFP threshold (f) values in the range (27, 28) (ton/month) in sub-figure (b) in FIG. 11.

Solution Repair: Various decisions pertaining to cloud adoption for an enterprise, i.e., service provider selection using the modelled approach have been already discussed. However, the enterprises on cloud are required to deal with post adoption challenges such as: compliance with the emerging data regulations, meet the revised carbon (emission) footprint targets, and business pressures of keeping the operational cost low.

A first step in the solution repair approach adopted by the system 100 is to analyze the current configuration. Table IV displays the initial solution. The data of 50 user centers of the enterprise was placed on $P_2$ service provider. The overall operational cost and total CFP for the enterprise requirements were estimated for the current settings. There are 10 data regulation violations detected by the compliance checker, while no violation in latency criteria. Detail mapping of each user center and data center placement $(x_{ij}^*)$ is known.

TABLE IV. Initial non-compliant solution

| User Centers | CSP | Operational Cost (M-USD/Month) | CFP (ton/month) | DR Violation | Latency Violation |
|---|---|---|---|---|---|
| 50 | $P_2$ | 1.0951 | 87.23 | 10 | 0 |
| User | center-data | | center | allocation | $(x_{ij}^*)$ : |

$\{(U_1, K_2), (U_2, K_1), ..., (U_{50}, K_5)\}$

The generated solutions are repaired such that it is data regulatory compliant and meets the revised carbon footprint targets. For an enterprise to be compliant and achieve minimal carbon footprint, there are multiple options (a) re-allocate (repair) within the same cloud service provider or (b) opt for multi-cloud environment and check, which service providers would be best suited for attaining the enterprise goals on carbon footprint. Results on three CFP threshold values ($\xi$) = {85, 80, 75} ton/month have been demonstrated.

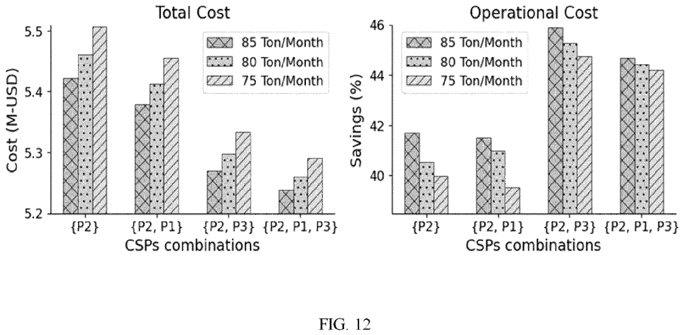

FIG. 12 depicts total cost and savings in operational cost when the solutions are repaired by the system 100. The comparison was done with the initial non-complaint solution considering each of the CFP threshold ($\xi$) values. The x-axis displays CSPs combinations $\{\{P_2\}, \{P_2, P_1\}, \{P_2, P_3\}, \{P_2, P_1, P_3\}\}$.

The experimental results stated that the enterprise migrating to multi-cloud (i.e., CSPs combinations) is advantageous than migrating within the same service provider $\{P_2\}$. The total cost is minimum in multi-cloud $\{P_2, P_1, P_3\}$ and $\{P_2, P_3\}$ combination compared to single provider. However, the repair solution with multi-cloud combination $\{P_2, P_3\}$ has the highest savings in operational cost. Hence, the enterprise can select CSP $P_3$ as another service provider for its data placement. Further, the results illustrate that as CFP threshold is set tighter, total cost increases while percentage savings in operational cost decreases.

Note, the savings in total cost depends on the quality of the initial configuration. If the initial configuration i.e., data placement is not optimal, and there are violations in data regulations, then repair (brownfield analysis) would result in significant improvements.

*D. Repair with specific data distribution at CSPs*

Data distribution among CSPs is important to avoid vendor lock-in and dependency issues. Table V illustrates the implications of data distribution among CSPs on costs. Results are demonstrated considering distinct data proportion among $\{P_2, P_3\}$ service provider. The distribution proportions considered are $\{(30, 70), (50, 50), (70, 30)\}$ (%) with CFP threshold ($\xi$) value as 80 ton/month.

TABLE V. Repair with specific data distribution at CSPs

| Migration cost (M-USD) | Total cost (M-USD) | Operational cost savings (%) | Migration count | Data distribution (%) |
|---|---|---|---|---|
| 1.7025 | 5.2975 | 45.28 | 36 | {86, 14} |
| 1.7320 | 5.3322 | 45.20 | 36 | {70, 30} |
| 1.8398 | 5.5004 | 44.29 | 39 | {50, 50} |
| 2.0630 | 5.8314 | 42.65 | 44 | {30, 70} |

It was observed that migrating more data to $P_3$ leads to larger user center migrations, along with increase in migration and total cost.

*E. Evaluation of Solutions Generated using Randomization Search*

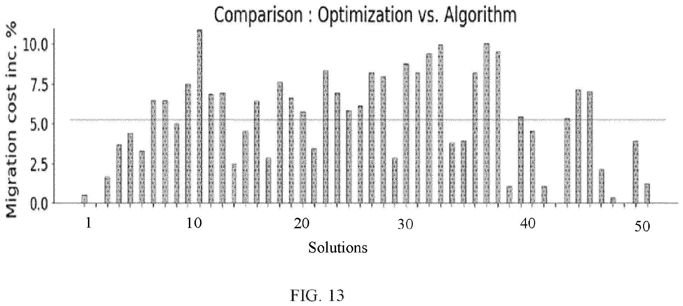

Storage service selection is a multi-objective problem, which comprises multiple Pareto-optimal solutions. Using Algorithm 1 multiple non-dominating solutions were obtained. Quality of solutions generated was evaluated using the Algorithm 2, by comparing it against the solutions obtained using an optimization method. For each of the non-dominating solutions the optimization problem was solved by minimizing the migration cost and setting the carbon footprint and operational cost obtained from the repair algorithm as a constraint. 50 non-dominating solutions generated by the method 300 were compared, and it was observed that on an average the algorithm is 5% away from the optimal solutions. In a few cases, Pareto-optimal solutions were obtained. These results are depicted in FIG. 13.

The written description describes the subject matter herein to enable any person skilled in the art to make and use the embodiments. The scope of the subject matter embodiments is defined by the claims and may include other modifications that occur to those skilled in the art. Such other modifications are intended to be within the scope of the claims if they have similar elements that do not differ from the literal language of the claims or if they include equivalent elements with insubstantial differences from the literal language of the claims.

The embodiments of present disclosure herein address unresolved problem of optimal storage selection in multi-cloud environments. The embodiment, thus provides a mechanism to generate one or more solutions related to the storage selection in multi-cloud environments, satisfying a plurality of constraints. Moreover, the embodiments herein further provide a mechanism of repairing the solutions, i.e., fine-tuning the solutions to accommodate changes in one or more of the constraints.

It is to be understood that the scope of the protection is extended to such a program and in addition to a computer-readable means having a message therein; such computer-readable storage means contain program-code means for implementation of one or more steps of the method, when the program runs on a server or mobile device or any suitable programmable device. The hardware device can be any kind of device which can be programmed including e.g., any kind of computer like a server or a personal computer, or the like, or any combination thereof. The device may also include means which could be e.g., hardware means like e.g., an application-specific integrated circuit (ASIC), a field-programmable gate array (FPGA), or a combination of hardware and software means, e.g., an ASIC and an FPGA, or at least one microprocessor and at least one memory with software processing components located therein. Thus, the means can include both hardware means and software means. The method embodiments described herein could be implemented in hardware and software. The device may also include software means. Alternatively, the embodiments may be implemented on different hardware devices, e.g., using a plurality of CPUs.

The embodiments herein can comprise hardware and software elements. The embodiments that are implemented in software include but are not limited to, firmware, resident software, microcode, etc. The functions performed by various components described herein may be implemented in other components or combinations of other components. For the purposes of this description, a computer-usable or computer readable medium can be any apparatus that can comprise, store, communicate, propagate, or transport the program for use by or in connection with the instruction execution system, apparatus, or device.

The illustrated steps are set out to explain the exemplary embodiments shown, and it should be anticipated that ongoing technological development will change the manner in which particular functions are performed. These examples are presented herein for purposes of illustration, and not limitation. Further, the boundaries of the functional building blocks have been arbitrarily defined herein for the convenience of the description. Alternative boundaries can be defined so long as the specified functions and relationships thereof are appropriately performed. Alternatives (including equivalents, extensions, variations, deviations, etc., of those described herein) will be apparent to persons skilled in the relevant art(s) based on the teachings contained herein. Such alternatives fall within the scope of the disclosed embodiments. Also, the words "comprising," "having," "containing," and "including," and other similar forms are intended to be equivalent in meaning and be open ended in that an item or items following any one of these words is not meant to be an exhaustive listing of such item or items, or meant to be limited to only the listed item or items. It must also be noted that as used herein and in the appended claims, the singular forms "a," "an," and "the" include plural references unless the context clearly dictates otherwise.

Furthermore, one or more computer-readable storage media may be utilized in implementing embodiments consistent with the present disclosure. A computer-readable storage medium refers to any type of physical memory on which information or data readable by a processor may be stored. Thus, a computer-readable storage medium may store instructions for execution by one or more processors, including instructions for causing the processor(s) to perform steps or stages consistent with the embodiments described herein. The term "computer-readable medium" should be understood to include tangible items and exclude carrier waves and transient signals, i.e., be non-transitory. Examples include random access memory (RAM), read-only memory (ROM), volatile memory, nonvolatile memory, hard drives, CD ROMs, DVDs, flash drives, disks, and any other known physical storage media.

It is intended that the disclosure and examples be considered as exemplary only, with a true scope of disclosed embodiments being indicated by the following claims.

**Claims**

1. A processor implemented method, comprising:

   receiving (302), via one or more hardware processors, information on a non-compliant initial allocation of a plurality of User Centers (UC), a plurality of enterprise user requirements, and specifications of one or more service providers as input data; and
   optimizing (304), via the one or more hardware processors, the initial allocation, comprising:

   identifying (304a) one or more non-compliant UC locations from among the plurality of UCs;
   determining (304b) a) a migration cost, b) an operational cost, and c) a carbon footprint involved in migrating each of the one or more non-compliant UC locations to a Data Regulatory (DR) and latency compliant Data centre (DC) location;
   determining (304c) a priority weight for each of the migration cost, the operational cost, and the carbon footprint; and
   obtaining (304d) a plurality of migration solutions, for a plurality of combinations of the priority weights, comprises performing for each of the one or more non-compliant UC locations:

   listing (402) a plurality of migrations to the latency compliant DC location for the one or more non-compliant UC locations;
   determining (404) a score for each of the plurality of migrations based on the determined priority weights, by using Multi Criteria Decision Making (MCDM) technique for the one or more non-compliant UC locations;
   ranking (406) the plurality of migrations based on the determined score for the one or more non-compliant UC locations;
   selecting (408) a migration having highest rank from among the plurality of migrations;
   migrating (410) each of the one or more non-compliant UC locations to the latency compliant DC location, using the selected migration as a feasible solution; and
   generating (412) a list of the plurality of feasible solutions, wherein the plurality of feasible solutions are generated by selectively prioritizing a) a migration cost, b) an operational cost, and c) a carbon footprint for each solution, and wherein the plurality of feasible solutions are used as the plurality of migration solutions to optimize the non-compliant initial allocation of the plurality of User Centers (UC).

2. The method as claimed in claim 1, wherein a UC from among a plurality of UCs is identified as the non-compliant UC if the UC is not DR compliant and a measured latency of UC-DC is exceeding a pre-defined threshold value.

3. The method as claimed in claim 1, wherein the priority weight for each of the migration cost, the operational cost, and the carbon footprint is determined such that sum of the priority weights is 1.

4. The method as claimed in claim 1, wherein the initial allocation is generated by iteratively performing till each of the one or more UCs is allocated to a compliant DC among the one or more DCs:

   obtaining (502), via the one or more hardware processors, a) one or more storage and processing requirements of one or more UCs, b) locations of a plurality of data centers (DCs), c) a resource cap, and d) pricing of the plurality of DCs;
   identifying (504), via the one or more hardware processors, one or more DR compliant DCs from among the plurality of DCs, and in same region of the one or more UCs; and
   allocating (506), via the one or more hardware processors, the one or more UCs to the identified one or more DR compliant DCs if a total carbon footprint of the one or more DR compliant DCs is less than a predefined threshold value, wherein a total operation cost is updated after the allocation, and wherein if not available in the same region as that of the one or more UCs, the allocation is done in a different region.

5. The method as claimed in claim 1, wherein an initial allocation is determined as the non-compliant allocation, comprising detecting a plurality of non-compliances in the initial allocation over a period of time due to one or more of: (i) a change in DR criteria for the one or more UCs, (ii) a change in invocation frequencies (demands) for one or more UCs resulting in the violation of pre-defined QoS thresholds, and (iii) a change in carbon footprint threshold for the allocation where the current total carbon footprint of the allocation violates the new threshold on carbon footprint.

6. The method as claimed in claim 1, wherein selectively prioritizing the migration cost, the operational cost, and the carbon footprint for each solution is based on i) a priority given to a first objective in a pre-defined range (0,1), wherein the priority increases in arithmetic progression for each of the solution, ii) a priority given to a second objective for each of the plurality of feasible solutions, wherein the priority to the second objective is selected in a pre-defined range of (0, 1- priority of the first objective), and iii) priority given to a third objective for each of the plurality of feasible solutions, wherein the priority given to the third objective is equal to 1-(priority of first objective + priority of second objective), wherein the plurality of feasible solutions are ordered to form an ordered solution list in each of a plurality of iterations by constructing an ideal function for each of the plurality of iterations, and wherein the ideal function is constructed by taking a minimal value of (i) operational cost, (ii) migration cost, (iii) total carbon footprint considering the plurality of solutions in the solution list, and with one or more enterprise decided priority values for each of first objective, the second objective, and the third objective.

7. The method as claimed in claim 1, wherein the plurality of feasible solutions are used with one or more other data to obtain a set of compliant solutions having (i) a minimal operational cost, (ii) a minimal migration cost, and (iii) a total carbon footprint value less than a predefined threshold, comprising iteratively performing in each of a plurality of iterations till a pre-defined number of iterations is reached:

   maintaining (602) a fixed number of ordered solutions in the solution list and ordering the fixed number of ordered solutions based on an ideal function in each of a plurality of iterations;
   initializing (604) a duplicate solution for each of the plurality of feasible solutions in a solution list, and replacing each UC-DC allocation in the duplicate solution by a DR criteria, latency, and carbon footprint compliant DC among a plurality of DCs, satisfying a pre-defined criterion wherein by replacing each UC-DC allocation, a new solution is obtained for each solution existing in the solution list; and
   including (606) each newly generated solution in the solution list, if the newly generated solution if a determined quality of the newly generated solution is exceeding a measured quality of at least one existing solution in the solution list, and wherein while including the newly generated solution in the solution list, a solution having least value of measured quality among the solutions existing in the solution list is discarded the last solution or else discarding the newly generated solution, wherein,
   the pre-defined number of iterations is a value in a predefined range (0,1), and is dependent on (i) a current iteration count, and (ii) the pre-defined limit on iterations, such that the value of this threshold deceases with increase in iteration count, and wherein,
   the DC is carbon footprint compliant for an UC if a resulting carbon footprint of the allocation is less than an estimated UC-carbon footprint limit, where the estimated UC-carbon footprint limit for each UC is obtained based on: (i) storage and processing resource requirements of the UC, and (ii) a predefined threshold on the total carbon footprint.

8. A system (100), comprising:

one or more hardware processors (102);
a communication interface (112); and
a memory (104) storing a plurality of instructions, wherein the plurality of instructions cause the one or more hardware processors to:

receive information on a non-compliant initial allocation of a plurality of User Centers (UC), a plurality of enterprise user requirements, and
specifications of one or more service providers as input data; and
optimize the initial allocation, by:

identifying one or more non-compliant UC locations from among the plurality of UCs;
determining a) a migration cost, b) an operational cost, and c) a carbon footprint involved in migrating each of the one or more non-compliant UC locations to a Data Regulatory (DR) and
latency compliant Data centre (DC) location;
determining a priority weight for each of the migration cost, the operational cost, and the carbon footprint; and
obtaining a plurality of migration solutions, for a plurality of combinations of the priority weights, comprises performing for each of the one or more non-compliant UC locations:

listing a plurality of migrations to the latency compliant DC location for the one or more non-compliant UC locations;
determining a score for each of the plurality of migrations based on the determined priority weights, by using Multi Criteria Decision Making (MCDM) technique for the one or more non-compliant UC locations;
ranking the plurality of migrations based on the determined score for the one or more non-compliant UC locations;
selecting a migration having highest rank from among the plurality of migrations;
migrating each of the one or more non-compliant UC locations to the latency compliant DC location, using the selected migration as a feasible solution; and
generating a list of the plurality of feasible solutions, wherein the plurality of feasible solutions are generated by selectively prioritizing a) a migration cost, b) an operational cost, and c) a carbon footprint for each solution, and wherein the plurality of feasible solutions are used as the plurality of migration solutions to optimize the non-compliant initial allocation of the plurality of User Centers (UC).

9. The system as claimed in claim 8, wherein the one or more hardware processors are configured to identify a UC from among a plurality of UCs as the non-compliant UC if the UC is not DR compliant and a measured latency of UC-DC is exceeding a pre-defined threshold value.

10. The system as claimed in claim 8, wherein the one or more hardware processors are configured to determine priority weight for each of the migration cost, the operational cost, and the carbon footprint such that sum of the priority weights is 1.

11. The system as claimed in claim 8, wherein the one or more hardware processors are configured to generate the initial allocation by iteratively performing till each of the one or more UCs is allocated to a compliant DC among the one or more DCs:

obtaining a) one or more storage and processing requirements of one or more UCs, b) locations of a plurality of data centers (DCs), c) a resource cap, and d) pricing of the plurality of DCs;
identifying one or more DR compliant DCs from among the plurality of DCs, and in same region of the one or more UCs; and
allocating the one or more UCs to the identified one or more DR compliant DCs if a total carbon footprint of the one or more DR compliant DCs is less than a predefined threshold value, wherein a total operation cost is updated after the allocation, and wherein if not available in the same region as that of the one or more UCs, the allocation is done in a different region.

12. The system as claimed in claim 8, wherein the one or more hardware processors are configured to determine an initial allocation as the non-compliant allocation, by detecting a plurality of non-compliances in the initial allocation over a period of time due to one or more of: (i) a change in DR criteria for the one or more UCs, (ii) a change in invocation frequencies (demands) for one or more UCs resulting in the violation of pre-defined QoS thresholds, and (iii) a change in carbon footprint threshold for the allocation where the current total carbon footprint of the allocation violates the new threshold on carbon footprint.

13. The system as claimed in claim 8, wherein the one or more hardware processors are configured to selectively prioritize the migration cost, the operational cost, and the carbon footprint for each solution based on i) a priority given to a first objective in a pre-defined range (0,1), wherein the priority increases in arithmetic progression for each of the solution, ii) a priority given to a second objective for each of the plurality of feasible solutions, wherein the priority to the second objective is selected in a pre-defined range of (0, 1- priority of the first objective), and iii) priority given to a third objective for each of the plurality of feasible solutions, wherein the priority given to the third objective is equal to 1-(priority of first objective + priority of second objective),
wherein the one or more hardware processors are configured to order the plurality of feasible solutions to form an ordered solution list in each of a plurality of iterations by constructing an ideal function for each of the plurality of iterations, and wherein the ideal function is constructed by taking a minimal value of (i) operational cost, (ii) migration cost, (iii) total carbon footprint considering the plurality of solutions in the solution list, and with one or more enterprise decided priority values for each of first objective, the second objective, and the third objective.

14. The system as claimed in claim 13, wherein the one or more hardware processors are configured to obtain a set of compliant solutions having (i) a minimal operational cost, (ii) a minimal migration cost, and (iii) a total carbon footprint value less than a predefined threshold, by using the plurality of feasible solutions with one or more other data, by iteratively performing in each of a plurality of iterations till a pre-defined number of iterations is reached:

maintaining a fixed number of ordered solutions in the solution list and ordering the fixed number of ordered solutions based on an ideal function in each of a plurality of iterations;
initializing a duplicate solution for each of the plurality of feasible solutions in a solution list, and replacing each UC-DC allocation in the duplicate solution by a DR criteria, latency, and carbon footprint compliant DC among a plurality of DCs, satisfying a pre-defined criterion wherein by replacing each UC-DC allocation, a new solution is obtained for each solution existing in the solution list; and
including each newly generated solution in the solution list, if the newly generated solution if a determined quality of the newly generated solution is exceeding a measured quality of at least one existing solution in the solution list, and wherein while including the newly generated solution in the solution list, a solution having least value of measured quality among the solutions existing in the solution list is discarded the last solution or else discarding the newly generated solution, wherein, the pre-defined number of iterations is a value in a predefined range (0,1), and is dependent on (i) a current iteration count, and (ii) the pre-defined limit on iterations, such that the value of this threshold deceases with increase in iteration count, and
wherein the DC is carbon footprint compliant for an UC if a resulting carbon footprint of the allocation is less than an estimated UC-carbon footprint limit, where the estimated UC-carbon footprint limit for each UC is obtained based on: (i) storage and processing resource requirements of the UC, and (ii) a predefined threshold on the total carbon footprint.

15. One or more non-transitory machine-readable information storage mediums comprising one or more instructions which when executed by one or more hardware processors cause:

receiving information on a non-compliant initial allocation of a plurality of User Centers (UC), a plurality of enterprise user requirements, and specifications of one or more service providers as input data; and
optimizing the initial allocation, comprising:

identifying one or more non-compliant UC locations from among the plurality of UCs;
determining a) a migration cost, b) an operational cost, and c) a carbon footprint involved in migrating each of the one or more non-compliant UC locations to a Data Regulatory (DR) and latency compliant Data centre (DC) location;
determining a priority weight for each of the migration cost, the operational cost, and the carbon footprint; and

obtaining a plurality of migration solutions, for a plurality of combinations of the priority weights, comprises performing for each of the one or more non-compliant UC locations:

listing a plurality of migrations to the latency compliant DC location for the one or more non-compliant UC locations;

determining a score for each of the plurality of migrations based on the determined priority weights, by using Multi Criteria Decision Making (MCDM) technique for the one or more non-compliant UC locations;

ranking the plurality of migrations based on the determined score for the one or more non-compliant UC locations;

selecting a migration having highest rank from among the plurality of migrations;

migrating each of the one or more non-compliant UC locations to the latency compliant DC location, using the selected migration as a feasible solution; and generating a list of the plurality of feasible solutions,

wherein the plurality of feasible solutions are generated by selectively prioritizing a) a migration cost, b) an operational cost, and c) a carbon footprint for each solution, and wherein the plurality of feasible solutions are used as the plurality of migration solutions to optimize the non-compliant initial allocation of the plurality of User Centers (UC).

FIG. 1

FIG. 2

receiving, via one or more hardware processors, information on a non-compliant initial allocation of a plurality of User Centres (UC), a plurality of enterprise user requirements, and specifications of one or more service providers as input data — 302

optimizing, via the one or more hardware processors, the initial allocation, comprising — 304

identifying one or more non-compliant UC locations from among the plurality of UCs — 304a

determining a) a migration cost, b) an operational cost, and c) a carbon footprint involved in migrating each of the one or more non-compliant UC locations to a Data Regulatory (DR) and latency compliant Data centre (DC) location — 304b

determining a priority weight for each of the migration cost, the operational cost, and the carbon footprint — 304c

obtaining a plurality of migration solutions, for a plurality of combinations of the priority weights — 304d

FIG. 3

300

listing a plurality of migrations to the compliant DC location for the one or more non-compliant UC locations

402

determining a score for each of the plurality of migrations based on the determined priority weights, by using Multi Criteria Decision Making (MCDM) technique for the one or more non-compliant UC locations

404

ranking the plurality of migrations based on the determined score for the one or more non-compliant UC locations

406

selecting a migration having highest rank from among the plurality of migrations

408

migrating each of the one or more non-compliant UC locations to the compliant DC location, using the selected migration as a feasible solution

410

generating (312) a list of the plurality of feasible solutions, wherein the plurality of feasible solutions are generated by selectively prioritizing a) a migration cost, b) an operational cost, and c) a carbon footprint for each solution, and wherein the plurality of feasible solutions are used as the plurality of migration solutions to optimize the non-compliant initial allocation of the plurality of User Centres (UC)

412

FIG.4

400

obtaining, via the one or more hardware processors, a) one or more storage and processing requirements of one or more UCs, b) locations of a plurality of data centres (DCs), c) a resource cap, and d) pricing of the plurality of DCs

502

identifying, via the one or more hardware processors, one or more DR compliant DCs from among the plurality of DCs, and in same region of the one or more UCs

504

allocating, via the one or more hardware processors, the one or more UCs to the identified one or more DR compliant DCs if a total carbon footprint of the one or more DR compliant DCs is less than a predefined threshold value, wherein a total operation cost is updated after the allocation, and wherein if not available in the same region as that of the one or more UCs, the allocation is done in a different region

506

FIG. 5

500

the plurality of feasible solutions are used with one or more other data to obtain a set of compliant solutions having (i) a minimal operational cost, (ii) a minimal migration cost, and (iii) a total carbon footprint value less than a predefined threshold, comprising iteratively performing in each of a plurality of iterations till a pre-defined number of iterations is reached:

maintaining a fixed number of ordered solutions in the solution list and ordering the fixed number of ordered solutions based on an ideal function in each of a plurality of iterations ⟍602

initializing a duplicate solution for each of the plurality of feasible solutions in a solution list, and replacing each UC-DC allocation in the duplicate solution by a DR criteria, latency, and carbon footprint compliant DC among a plurality of DCs, satisfying a pre-defined criterion wherein by replacing each UC-DC allocation, a new solution is obtained for each solution existing in the solution list ⟍604

ranking the plurality of migrations based on the determined score for the one or more non-compliant UC locations ⟍606

including each newly generated solution in the solution list, if the newly generated solution if a determined quality of the newly generated solution is exceeding a measured quality of at least one existing solution in the solution list, and wherein while including the newly generated solution in the solution list, a solution having least value of measured quality among the solutions existing in the solution list is discarded the last solution or else discarding the newly generated solution ⟍608

600 ⟍

FIG.6

Allocation Engine

Input data
UC
{Storage & Compute Reqt.}

Output
UC→ {DC, CSP }

Cloud Service Provider (CSP)
{DC Locations, Resources, Pricing}

Criteria{Data Regulations; Carbon
Emission; Latency}

Non-compliance
Checker

Input data

Initial Configuration
UC→{DC, CSP}

Updated Criteria

Repair
Engine

Output
UC→ {DC, CSP }

FIG.7

**Initial Solution**

$S_1$ ..... $S_2$ $S_m$

$U_1$ $U_2$ ..... $U_n$

**Non-Compliance Checker**

DR Reg Viol: $\{UC_x, UC_y, ..\}$

QoS Viol: $\{UC_a, UC_b, ..\}$

TOC, TMC, TCFP

**Repaired Solution**

$S_1$ $S_2$ ..... $m$

$U_1$ $U_2$ ..... $U_n$

**UC Migration Matrix**

|       | $S_1$ | $S_2$ | ..... | $S_m$ |
|-------|-------|-------|-------|-------|
| $U_x$ | Δ     | N/A   | ....  | In.   |
| $U_y$ | In.   | Δ     | ....  | Δ     |
| ..... | ..... | ..... | ..... | ..... |
| $U_\varphi$ | N/A | Δ | ....  | In.   |

| Rank | Final Migration |
|------|-----------------|
| 1    | $U_x(S_1 \rightarrow S_p)$ |
| 2    | $U_Y(S_a \rightarrow S_t)$ |
| .... | ....            |
| $r$  | $U_\varphi(S_z \rightarrow S_n)$ |

**Highest Ranked Migration Selector**

$w_{OC}, w_{MC}, w_{CFP}$

| Migrations | ΔOC | ΔMC | ΔCFP |
|-----------|-----|-----|------|
| $U_x(S_1 \rightarrow S_p)$ |     |     |      |
| $U_x(S_1 \rightarrow S_r)$ |     |     |      |
| ............. |     |     |      |

For each UC

FIG.8

Initial | Migration

Variable: $x_{ij}^*$
$x_{11} = 1$: UC (1) is allocated on DC (1) & $x_{21} = 1$:
UC (2) is allocated on DC (2).

Variable: $y_{ijk}$
Migration: $y_{i(j)} \rightarrow y_{i(k)}$
Example: $y_{1(1)} \rightarrow y_{1(2)}$

FIG. 9

FIG. 10

(a)

FIG. 11

(a)

FIG. 12

Comparison : Optimization vs. Algorithm

FIG. 13

**EUROPEAN SEARCH REPORT**

Europäisches Patentamt
European Patent Office
Office européen des brevets

| | Application Number |
|---|---|
| | EP 24 20 2558 |

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 10 778 772 B2 (HEWLETT PACKARD ENTPR DEV LP [US]) 15 September 2020 (2020-09-15) * the whole document * | 1-15 | INV. G06Q10/0631 G06Q10/0637 G06F9/50 |
| X | US 2023/138727 A1 (WONG KIM POH [SG] ET AL) 4 May 2023 (2023-05-04) * abstract * * paragraph [0043] - paragraph [0057] * | 1-15 | |
| A | WADHWA BHARTI ET AL: "Energy and carbon efficient VM placement and migration technique for green cloud datacenters", 2014 SEVENTH INTERNATIONAL CONFERENCE ON CONTEMPORARY COMPUTING (IC3), IEEE, 7 August 2014 (2014-08-07), pages 189-193, XP032642332, DOI: 10.1109/IC3.2014.6897171 ISBN: 978-1-4799-5172-7 [retrieved on 2014-09-11] * the whole document * | 1-15 | |
| X,P | ROY SHUBHRO ET AL: "A Decision Framework for Carbon-aware Storage Service Selection in Multi-Cloud Environment", 2024 16TH INTERNATIONAL CONFERENCE ON COMMUNICATION SYSTEMS & NETWORKS (COMSNETS), IEEE, 3 January 2024 (2024-01-03), pages 807-815, XP034547703, DOI: 10.1109/COMSNETS59351.2024.10427162 [retrieved on 2024-02-16] * the whole document * | 1-15 | **TECHNICAL FIELDS SEARCHED (IPC)** G06Q G06F |

The present search report has been drawn up for all claims

| Place of search | Date of completion of the search | Examiner |
|---|---|---|
| Munich | 4 March 2025 | Chauvet, Christophe |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 24 20 2558

This annex lists the patent family members relating to the patent documents cited in the above-mentioned European search report.
The members are as contained in the European Patent Office EDP file on
The European Patent Office is in no way liable for these particulars which are merely given for the purpose of information.

04-03-2025

| Patent document cited in search report | | Publication date | Patent family member(s) | Publication date |
|---|---|---|---|---|
| US 10778772 | B2 | 15-09-2020 | NONE | |
| US 2023138727 | A1 | 04-05-2023 | NONE | |

EPO FORM P0459

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- IN 202321076675